(19) Europäisches Patentamt
European Patent Office
Office européen des brevets

(11) **EP 4 411 893 A1**

(12) **EUROPEAN PATENT APPLICATION**
published in accordance with Art. 153(4) EPC

(43) Date of publication:
**07.08.2024 Bulletin 2024/32**

(21) Application number: **22876591.3**

(22) Date of filing: **03.10.2022**

(51) International Patent Classification (IPC):
*H01M 4/587* (2010.01)      *C01B 32/372* (2017.01)
*C01B 33/02* (2006.01)      *H01M 4/36* (2006.01)
*H01M 4/38* (2006.01)

(52) Cooperative Patent Classification (CPC):
**C01B 32/372; C01B 33/02; H01M 4/36; H01M 4/38;
H01M 4/587;** Y02E 60/10

(86) International application number:
**PCT/JP2022/036962**

(87) International publication number:
**WO 2023/054729 (06.04.2023 Gazette 2023/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.10.2021 JP 2021163060**

(71) Applicant: **Resonac Corporation
Tokyo 105-7325 (JP)**

(72) Inventors:
• ITO, Yuji
  **Tokyo 105-8518 (JP)**
• TONEGAWA, Akihisa
  **Tokyo 105-8518 (JP)**
• KURITA, Takayuki
  **Tokyo 105-8518 (JP)**
• FUJITA, Masato
  **Tokyo 105-8518 (JP)**
• INOUE ,Hirofumi
  **Tokyo 105-8518 (JP)**

(74) Representative: **Strehl Schübel-Hopf & Partner
Maximilianstrasse 54
80538 München (DE)**

(54) **COMPOSITE PARTICLES, NEGATIVE ELECTRODE ACTIVE MATERIAL AND LITHIUM ION
SECONDARY BATTERY**

(57)      A composite particle including carbon and silicon, in which the composite particle contains a crystalline metal oxide particle, and the end of the metal oxide particle is present inside the surface of the composite particle, and pores are present on the surface of the composite particle. According to the present invention, there can be provided a composite particle, in which silicon is attached to the inside of fine pores of a carbon material that has been provided with specific fine pores, the composite particle also contains a crystalline metal oxide particle, the end of the metal oxide particle is present inside the surface of the composite particle, and furthermore, pores are present on the surface of the composite particle. By using this composite particle, a lithium-ion secondary battery with excellent rate characteristics and cycle characteristics can be provided.

[Fig. 1]

**Description**

Technical Field

The present invention relates to a composite particle, a negative electrode active material, a negative electrode mixture layer for a lithium-ion secondary battery including the composite particle and the negative electrode active material, and a lithium-ion secondary battery.

Background Art

Secondary batteries used in IT devices such as smartphones and tablet PCs, vacuum cleaners, electric tools, electric bicycles, drones, and automobiles require negative electrode active materials with high capacity and high output. Silicon (theoretical specific capacity: 4200 mAh/g), which has a higher theoretical specific capacity than currently used graphite (theoretical specific capacity: 372 mAh/g), has attracted attention as a negative electrode active material.

However, silicon (Si) expands and contracts in volume up to about 3 to 4 times in association with electrochemical intercalation and deintercalation of lithium. As a result, the silicon particles collapse or are separated from the electrode, and thus it is known that lithium-ion secondary batteries using silicon have extremely low cycle characteristics. In addition, since the reaction with Li is slower compared to graphite, there is a problem that the capacity that can be utilized in rapid charging and discharging is smaller. For this reason, instead of simply replacing graphite with silicon, attempts to reduce the degree of expansion and contraction of the negative electrode material as a whole and to lower the resistance by surface treatment are currently being actively studied.

As a negative electrode material for a lithium-ion secondary battery on which surface treatment has been carried out, JP2002-141069A (Patent Literature 1) discloses a structure in which metal oxide particles are dispersed on the surface of a carbon material or in an amorphous carbon coating.

In addition, JP2014-514683A (Patent Literature 2) discloses a structure in which metal oxide particles are dispersed on the surface of the silicon core material or in an amorphous carbon coating.

Citation List

Patent Literature

Patent Literature 1: JP2002-141069A
Patent Literature 2: JP2014-514683A

Summary of Invention

Technical Problem

However, the negative electrode materials for a lithium-ion secondary battery of Patent Literatures 1 and 2 do not have sufficient rate characteristics and cycle characteristics.

In addition, the composite particle described in Patent Literature 1 has a structure in which the metal oxide is dispersed and arranged around the carbon material, and the carbon material and metal oxide are covered with the amorphous carbon coating, but there is no oxide inside the core material, and the structure does not have holes connecting from the surface to the oxide particles.

The composite particle described in Patent Literature 2 has the metal oxide particles dispersed on the surface of the silicon core material or in the amorphous carbon coating, but there is no oxide inside the core material, and the structure does not have holes connecting from the surface to the oxide particles.

An object of the present invention is to provide a lithium-ion secondary battery with excellent rate characteristics and cycle characteristics, and to provide a composite particle that can be utilized therein.

Solution to Problem

The configuration of the present invention is as follows:

[1] A composite particle including carbon and silicon, wherein the composite particle includes a metal oxide particle;

an end of the metal oxide particle is present inside the surface of the composite particle, and pores are present on the surface of the composite particle; and

(L1)/(L2) is 0.5 or more,

wherein the average value of the distance from an outermost surface position of the composite particle to the end of the metal oxide particle is defined as (L1), and the average value of the depth of a pore, which has a pore diameter of 10 nm or more and is among the above pores, from an outermost surface position is defined as (L2).

[2] The composite particle according to the [1], wherein the metal oxide particle exhibits crystallinity.

[3] The composite particle according to the [1] or the [2], wherein the average value (L1) of the distance from an outermost surface position of the composite particle to the end of the metal oxide particle is 10 to 1000 nm.

[4] The composite particle according to any of the [1] to the [3], wherein the average value $D_{S50}$ of the diameter of the metal oxide particle is 10 to 200 nm.

[5] The composite particle according to any of the [1] to the [4], wherein the crystallite size of the metal oxide particle as determined by powder X-ray diffraction measurement (powder XRD) is 5 to 200 nm.

[6] The composite particle according to any of the [1] to the [5], wherein the metal oxide particle includes at least one selected from Al, Ti, V, Y, Zr, Nb, Mo, W, La, Hf, Ta, and Ce, and includes, as an optional component, one selected from Li, Na, K, Mg, Ca, Ba, B, N, P, S, F, and Cl, and they are present in the form of a compound or in the form of separate oxides.

[7] The composite particle according to the [6], wherein the total content rate of the Al, Ti, V, Y, Zr, Nb, Mo, W, La, Hf, Ta, and Ce as elements is 0.006 to 8.00% by mass, and the total content rate of the Li, Na, K, Mg, Ca, Ba, B, N, P, S, F, and Cl as elements is 0.00 to 5.00% by mass.

[8] The composite particle according to any of the [1] to the [6], wherein the area-averaged diameter $D_{A,S}$ of an opening of the pores formed on the surface of the composite particle is 10 to 200 nm.

[9] The composite particle according to any of the [1] to the [7], wherein the average value of the proportion of the opening area of the pores formed on the surface of the composite particle to the outermost surface area is 5 to 65%.

[10] The composite particle according to any of the [1] to the [8], wherein the average value (L2) of the depth of a pore, which has a pore diameter of 10 nm or more and is among the above pores, from an outermost surface position is 10 to 1000 nm.

[11] The composite particle according to any of the [1] to the [9], wherein the cumulative fine pore volume $V_{200}$, calculated by BJH method, of fine pores of 200 nm or less is 0.003 to 0.15 $cm^3/g$.

[12] The composite particle according to any of the [1] to the [10], wherein the cumulative fine pore volume $V_{3-200}$, calculated by BJH method, of fine pores having a fine pore diameter of 3 nm or more and 200 nm or less is 0.003 $cm^3/g$ or more.

[13] The composite particle according to any of the [1] to the [11], wherein the ratio of the cumulative fine pore volume $V_{3-200}$, calculated by BJH method, of fine pores having a fine pore diameter of 3 nm or more and 200 nm or less to the cumulative fine pore volume $V_{200}$, calculated by BJH method, of fine pores having a fine pore diameter of 200 nm or less is 55% or more.

[14] The composite particle according to any of the [1] to the [12], wherein the 50% particle diameter $D_{V50}$ is 1.0 um or more and 20.0 um or less, and the 90% diameter $D_{V90}$ is 30.0 um or less in the cumulative particle size distribution on a volume basis.

[15] The composite particle according to any of the [1] to the [13], wherein the BET specific surface area is 2.0 $m^2/g$ or more and 20.0 $m^2/g$ or less.

[16] The composite particle according to any of the [1] to the [14],

wherein $I_{Si}/I_G$ is 0.10 or more and 1.30 or less, and

the R value ($I_D/I_G$) is 1.00 or more and 1.30 or less, wherein, in the Raman spectrum of the composite particle, a peak is present at 450 to 495 $cm^{-1}$, the intensity of the peak is defined as $I_{Si}$, the intensity of the G band (peak intensity in the vicinity of 1600 $cm^{-1}$) is defined as $I_G$, and the intensity of the D band (peak intensity in the vicinity of 1360 $cm^{-1}$) is defined as $I_D$.

[17] The composite particle according to any of the [1] to the [15], wherein the full width at half maximum of the peak of the (111) plane of Si is 3.0 deg. or more in an XRD pattern, using Cu-K$\alpha$ radiation, of the composite particle.

[18] The composite particle according to any of the [1] to the [16], wherein the oxygen content rate is 0.3 to 10% by mass.

[19] The composite particle according to any of the [1] to the [17], wherein SiC is not present.

[20] The composite particle according to any of the [1] to the [18], wherein the Si content rate is 20 to 85% by mass.

[21] The composite particle according to any of the [1] to the [19], wherein the carbon is amorphous.

[22] The composite particle according to any of the [1] to the [20],

wherein $A_{Si}$ is 0.05 or more;

$$A_C / (A_C + A_{Si} \times (B_{SiO2} + B_{SiO}))$$

is 0.55 or more,
wherein the ratios of the number of atoms of Si, O, and C according to the Narrow spectrum of X-ray photoelectron spectroscopy are defined as $A_{Si}$, $A_O$, and $A_C$, respectively, and the ratios of $SiO_2$ and $SiO$ among the Si species ratios according to Si2p spectral state analysis are defined as $B_{SiO2}$ and $B_{SiO}$, respectively; and the true density according to dry density measurement using helium gas is 1.80 g/cm$^3$ or more and 2.30 g/cm$^3$ or less.

[23] A method for producing a composite particle, including the following steps (1), (2), and (3).

Step (1): a step of coating raw material carbon or a resin that turns into raw material carbon by heating in an inert atmosphere in step (2) described below with a metal oxide or a metal oxide precursor;
Step (2): a step of heating a material obtained in the step (1), which has been coated with the metal oxide or metal oxide precursor, in an inert atmosphere, followed by activation to obtain a carbon material having pores formed by an action of the metal oxide and fine pores due to the activation; and
Step (3): a step of allowing a Si-containing gas to act on the carbon material, which has been heated, to precipitate a Si-containing compound on the surface and in fine pores of the carbon material, thereby obtaining a composite particle including porous carbon and silicon.

[24] A negative electrode active material including the composite particle according to any of the [1] to the [22].
[25] A negative electrode mixture layer including the negative electrode active material according to the [24].
[26] A lithium-ion secondary battery including the negative electrode mixture layer according to the [25].

Advantageous Effect of Invention

By using the composite particle of the present invention, a lithium-ion secondary battery with excellent rate characteristics and cycle characteristics can be provided.

Brief Description of Drawings

[Figure 1] Figure 1 is a cross-sectional SEM image of part of the composite particle of the present invention.
[Figure 2] Figure 2 is an image obtained by binarizing the cross-sectional SEM image of Figure 1.
[Figure 3] Figure 3 is a graph for determining the circle equivalent diameter at a cumulative frequency of 50% from the area of hollow metal oxide particles determined from the image of Figure 2.
[Figure 4] Figure 4 is a SEM image of the surface of the composite particle.
[Figure 5] Figure 5 is an image obtained by binarizing the SEM image of Figure 4.

Description of Embodiments

Hereinafter, embodiments of the present invention will be described.

[1] Composite particle

A composite particle according to one embodiment of the present invention is a composite particle including silicon and carbon. It is preferable that the carbon includes amorphous porous carbon. When the carbon includes amorphous porous carbon, it can absorb changes in volume due to the expansion and contraction of silicon associated with lithiation and delithiation. The composite particle also contains a metal oxide particle, and the end of the metal oxide particle is present inside the surface of the composite particle, and furthermore, pores are present on the surface of the composite particle.
It is preferable that the metal oxide particle exhibits crystallinity, and as the method for confirming this, a transmission electron microscope (TEM), electron beam diffraction by TEM, or powder X-ray diffraction measurement (powder XRD) can be used, for example.

The pores are cavities with a small diameter that have an opening on the surface of the composite particle and extend therefrom into the surface layer part, the tip of which does not reach any other surface of the composite particle and is in the form of a dead end.

The "surface layer part" means a layer of the portion having a thickness of 50% or less of the particle diameter of the composite particle from the surface of the composite particle.

The "fine pores" described below are the overall microscopic voids that are present in the composite particle, and their diameter and volume are determined by the nitrogen adsorption test in the present specification. Fine pores are a concept that encompasses the pores.

In the present specification, the term "surface" shall mean the external surface. Accordingly, the interior of pores and the interior of fine pores do not correspond to the surface of the composite particle.

The composite particle according to one embodiment of the present invention is measured using an apparatus, such as SEM, STEM, and EDS for the surface and cross-section, that can clearly distinguish the core material from the oxide particle and clearly recognize the pores. Next, an example of the cross-sectional SEM measurement method will be described.

First, cross-sectional SEM observation is carried out on a group of composite particles sampled from a homogeneous state. For example, it may be obtained by taking a scoop from a large amount of well-mixed composite particle powder with a microspatula or other means, placing it on carbon tape, and producing a cross-section with a cross-section polisher, for example, or by embedding well-mixed powder in a resin, which is then polished to generate a cross-section.

Even in the state where another particle that is clearly different in shape or composition from the composite particle is mixed in the composite particles, it can be distinguished from the composite particles by the above SEM and EDS (SEM-EDS), for example. Accordingly, even in the state where the composite particle is present as an electrode mixture layer in a lithium-ion secondary battery, the characteristics of the composite particle can be grasped by SEM-EDS for its cross-section, for example. However, particles cracked at the time of electrode pressing are excluded from the measurement subject. Whether or not cracking occurred at the time of electrode pressing can be readily discerned from the shape of the adjacent composite particles.

Composite particles to be measured by cross-sectional SEM shall be, for example, 100 fields of view freely-selected. However, the same particle shall be measured in up to one field of view. The magnification shall be 1 to 100,000 times, and shall be a magnification that allows clear confirmation of the targeted subject.

Image analysis software, such as ImageJ, can be used in order to measure the target distance, depth, diameter, and proportion from the obtained images.

The targeted distance and depth can be determined by preparing images of 100 fields of view, determining the largest value of the measured values for each field of view, and averaging them over the 100 fields of view.

The targeted diameter can be determined by preparing images of 100 fields of view, and for the figures obtained by binarizing them, obtaining the circle equivalent diameter of the area at an area cumulative frequency of 50%.

The targeted proportion can be determined from binarized images of 100 fields of view.

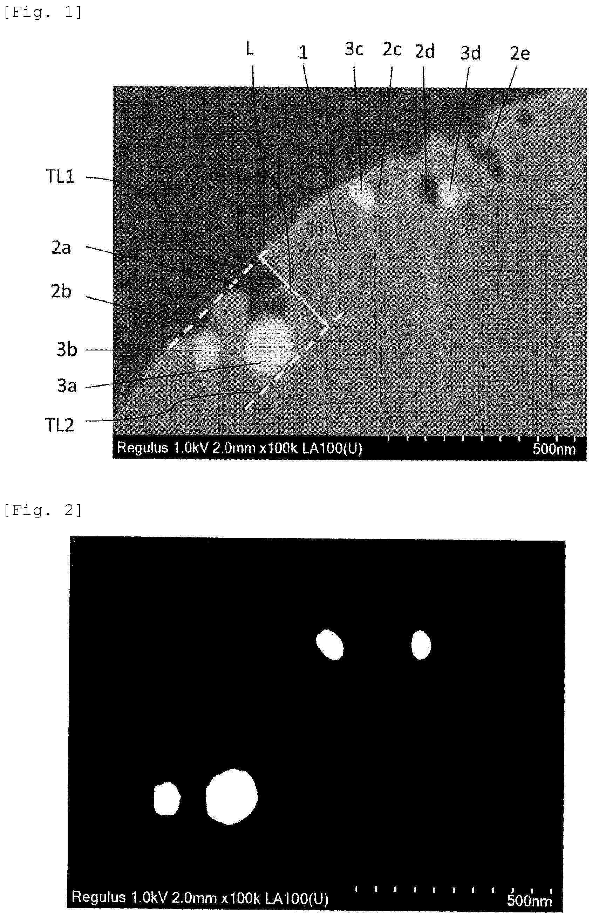

Figure 1 shows a cross-sectional SEM image of a composite particle 1, a specific example of the composite particle of the present invention. Figure 1 is a cross-sectional SEM image of a portion of the composite particle 1, including the surface layer part.

The composite particle 1 has a number of pores such as a pore 2a, a pore 2b, a pore 2c, a pore 2d, and a pore 2e in the surface layer part. In Figure 1, the pore 2d does not have an opening on the surface of the composite particle 1, but other cross-sectional SEM images of the composite particle 1 confirm that it does have an opening on the surface of the composite particle 1. A metal oxide particle 3a, a metal oxide particle 3b, a metal oxide particle 3c, and a metal oxide particle 3d are present at the innermost section of the pore 2a, the pore 2b, the pore 2c, and the pore 2d, respectively. In Figure 1, it cannot be confirmed that the metal oxide particle 3c is present at the innermost section of the pore 2c, but other cross-sectional SEM images of the composite particle 1 confirm that the metal oxide particle 3d is present at the innermost section of the pore 2d.

In the composite particle according to one embodiment of the present invention, it is preferable that the average value (L1) of the distance from the outermost surface position of the composite particle to the end of the metal oxide particle is 10 nm or more and 1000 nm or less.

Here, the "end of the metal oxide particle" refers to, in the cross-sectional SEM image of the composite particle, the point closest to the tip of the innermost section of the pore among points on the line showing the outline of the metal oxide particle.

How to determine the average value (L1) will be described using the cross-sectional SEM image shown in Figure 1. A metal oxide particle appearing in the cross-sectional SEM image is assumed to be an ellipsoid. A tangent line of the composite particle, and among two tangent lines of the metal oxide particle parallel to this, the one farther from the tangent line of the composite particle, are assumed. Among combinations of the tangent line of the composite particle and the tangent line of the metal oxide particle, the combination with the smallest distance between the both tangent lines is selected. In Figure 1, the combination selected for the metal oxide particle 3a is a tangent line TL1 of the composite particle 1 and a tangent line TL2 of the metal oxide particle 2a. A distance L between the tangent line TL1 and the tangent line TL2 is measured, and among the distance L measured for each metal oxide particle, the largest one is defined as a distance L1 for that field of view, and the average value of L1 over 100 fields of view is the average value (L1).

L1 is the distance from the outermost surface position of the composite particle to the end of the metal oxide particle.

When the average value (L1) is 10 nm or more, the pores formed inside the composite particle are deeper, and therefore, the composite particle has a lower resistance due to an increased area where it can react with lithium ions, resulting in improved rate characteristics. From the same viewpoint, the average value (L1) is more preferably 15 nm or more, and still more preferably 20 nm or more.

When the average value (L1) is 1000 nm or less, the pores formed inside the composite particle are shallower, and therefore, side reactions can be reduced, thereby reducing deterioration of cycle characteristics. From the same viewpoint, the distance is more preferably 900 nm or less, and still more preferably 800 nm or less.

In the composite particle according to one embodiment of the present invention, it is preferable that the average value $D_{S50}$ of the diameter of the metal oxide particle is 10 nm or more and 200 nm or less.

The $D_{S50}$ can be determined by using cross-sectional SEM images of the composite particle of 100 fields of view and following the method for determining the "targeted diameter" described above.

When the $D_{S50}$ is 10 nm or more, pores having a diameter of 10 nm or more can be formed on the surface of the composite particle, resulting in improved rate characteristics. From the same viewpoint, the $D_{S50}$ is more preferably 15 nm or more, and still more preferably 20 nm or more.

When the $D_{S50}$ is 200 nm or less, the diameter of pores on the surface of the composite particle can be kept to 200 nm or less, thereby reducing a reduction in energy density. From the same viewpoint, the $D_{S50}$ is more preferably 150 nm or less, and still more preferably 100 nm or less.

In the composite particle according to one embodiment of the present invention, it is preferable that the crystallite size of the metal oxide particle as determined by powder X-ray diffraction measurement (powder XRD) is 5 nm or more and 200 nm or less.

When the crystallite size is 5 nm or more, pores can be formed on the surface of the composite particle, resulting in improved rate characteristics. From the same viewpoint, the crystallite size is more preferably 10 nm or more, and still more preferably 15 nm or more. Synchrotron radiation may be used as the light source for powder XRD.

When the crystallite size is 200 nm or less, the diameter of the metal oxide particle can be made to be 200 nm or less and the $D_{S50}$ of pores on the surface of the composite particle can be kept to 200 nm or less, thereby reducing a reduction in energy density. From the same viewpoint, the crystallite size is more preferably 150 nm or less, and still more preferably 100 nm or less.

The crystallite size is calculated by, for example, the following Scherrer equation from the full width at half maximum of the peak of the crystal in XRD.

$$D = K\lambda/(B\cos\theta) \quad (1)$$

where

D: crystallite size (nm)
K: Scherrer constant (= 0.85)
$\lambda$: X-ray wavelength (nm)
B: diffraction line broadening (rad)
$\theta$: Bragg angle (rad).

The peak of the crystal to be used shall be the strongest peak unless there are special circumstances, and if it cannot be measured accurately by any means, the next highest peak shall be used sequentially.

In the composite particle according to one embodiment of the present invention, the metal oxide particle includes at least one or more selected from Al, Ti, V, Y, Zr, Nb, Mo, W, La, Hf, Ta, and Ce, and may include at least one or more selected from Li, Na, K, Mg, Ca, Ba, B, N, P, S, F, and Cl, and they may be present as a compound or may be present as separate oxides.

When the metal oxide particle contains Al, Ti, V, Y, Zr, Nb, Mo, W, La, Hf, Ta, or Ce, pores can be formed on the surface of the composite particle. In addition, from the ease of adjusting the pore diameter and the pore formation speed, it is more preferable that the metal oxide particle includes Ti, V, Y, or Nb. Li, Na, K, Mg, Ca, Ba, B, N, P, S, F, and Cl are used to accelerate the formation of pores when producing the composite particle of the present invention.

The presence of these elements can be confirmed by elemental analysis such as inductively coupled plasma atomic emission spectroscopy (ICP-AES) or by identification of the peak of the crystal in XRD.

In the composite particle according to one embodiment of the present invention, it is preferable that the total content rate of Al, Ti, V, Y, Zr, Nb, Mo, W, La, Hf, Ta, and Ce as elements is 0.006% by mass or more and 8.0% by mass or less.

When the total content rate is 0.006% by mass or more, many pores can be formed on the surface of the composite particle, resulting in improved rate characteristics. From the same viewpoint, the total content rate is more preferably 0.01% by mass or more, and still more preferably 0.03% by mass or more.

When the total content rate is 8.00% by mass or less, formation of excessive pores on the surface of the composite particle can be reduced, and deterioration of the cycle characteristics of the composite particle can be reduced. In addition, a reduction in energy density can be reduced. From the same viewpoint, the total content is more preferably 7.00% by mass or less, and still more preferably 6.00% by mass or less.

It is preferable that the total content rate of Li, Na, K, Mg, Ca, Ba, B, N, P, S, F, and Cl as elements is 0.00% by mass or more and 5.00% by mass or less. When the total content is greater than 5.00% by mass, the energy density tends to be reduced.

This content rate can be determined from elemental analysis such as, for example, ICP-AES.

In the composite particle according to one embodiment of the present invention, it is preferable that the area-averaged diameter $D_{A,S}$ of the opening of pores formed on the surface of the composite particle is 10 nm or more and 200 nm or less.

The $D_{A,S}$ can be determined by using SEM images of the composite particle of 100 fields of view and following the method for determining the "targeted diameter" described above.

When the $D_{A,S}$ is 10 nm or more, the composite particle has an increased area where it can effectively react with lithium ions, resulting in improved rate characteristics. From the same viewpoint, the $D_{A,S}$ is more preferably 15 nm or more, and still more preferably 20 nm or more.

When the $D_{A,S}$ is 200 nm or less, a reduction in energy density due to an increase in voids in the particle can be reduced. From the same viewpoint, the $D_{A,S}$ is more preferably 150 nm or less, and still more preferably 100 nm or less.

In the composite particle according to one embodiment of the present invention, it is preferable that the average value of the proportion of the opening area of pores formed on the surface of the composite particle based on the outermost surface area is 5% or more and 65% or less. The "outermost surface area" means the surface area of the composite particle, assuming that there are no pore openings on the surface of the composite particle.

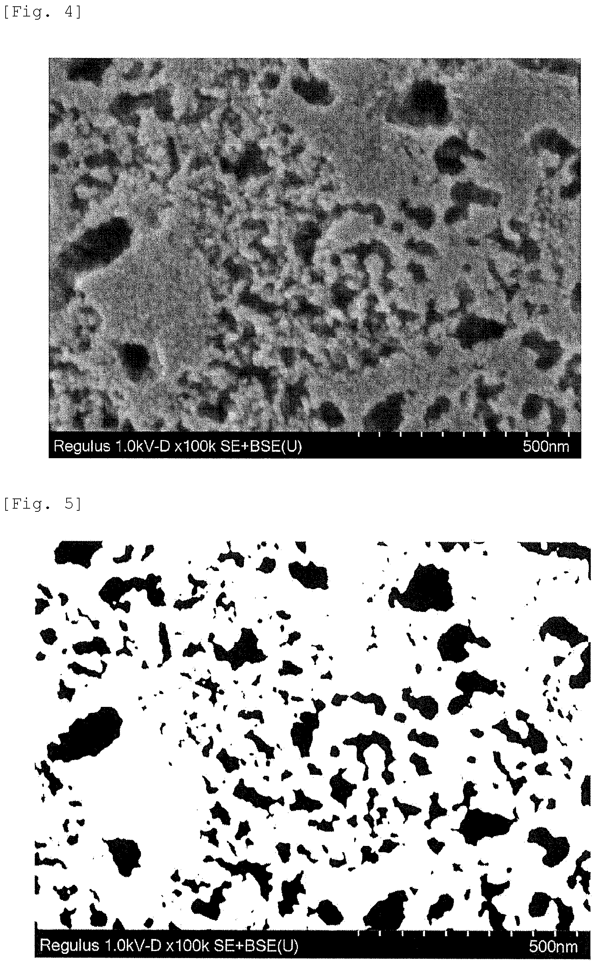

The proportion can be determined by binarizing SEM images of the composite particle to obtain figures of pore shapes, such as Figure 5, and then dividing the sum of the area of each of these figures by the sum of the area of each figure and the area of the other portions, that is, the area of the field of view. By calculating this proportion for all 100 fields of view and averaging them, the average value of the proportion can be determined.

When the average value of the proportion is 5% or more, the composite particle has an increased area where it can react with lithium ions, resulting in improved rate characteristics. From the same viewpoint, the average value of the proportion is more preferably 7% or more, and still more preferably 10% or more.

When the average value of the proportion is 65% or less, a reduction in energy density due to an increase in voids in the particle can be reduced. From the same viewpoint, the average value of the proportion is more preferably 60% or less, and still more preferably 55% or less.

In the composite particle according to one embodiment of the present invention, it is preferable that the average value (L2) of the depth of a pore, which has a pore diameter of 10 nm or more and is among the above pores, from the surface is 10 nm or more and 1000 nm or less.

The "pore diameter" is the size of the opening of a pore on the surface of the composite particle in a cross-sectional SEM image.

How to determine the average value (L2) will be described using the cross-sectional SEM image shown in Figure 1. Among pores having a pore diameter of 10 nm or more, for those in which the metal oxide particle is present at the innermost section, the value of L is measured as described above. For pores in which the metal oxide particle is not present at the innermost section, among combinations of the tangent line of the composite particle and the tangent line of the pore innermost section parallel to this, the combination with the smallest distance between the both tangent lines is selected as $L_d$. Among the distance L and $L_d$ measured for each pore with a pore diameter of 10 nm or more, the largest one is defined as a distance L2 for that field of view, and the average value of L2 over 100 fields of view is the average value (L2). L2 is the distance from the outermost surface position of the composite particle to the end of the metal oxide particle.

When the average value (L2) is 10 nm or more, the composite particle has a lower resistance due to an increased area where it can react with Li ions, resulting in improved rate characteristics. From the same viewpoint, the average value (L2) is more preferably 15 nm or more, and still more preferably 20 nm or more.

When the average value (L2) is 1000 nm or less, side reactions can be reduced, thereby reducing deterioration of cycle characteristics. From the same viewpoint, the average value (L2) is more preferably 900 nm or less, and still more preferably 800 nm or less.

In the composite particle according to one embodiment of the present invention, the ratio (L1)/(L2) of the average value (L1) to the average value (L2) needs to be 0.5 or more.

When the ratio is 0.5 or more, the probability that the pore formed by the metal oxide particle is continuously formed from the surface of the composite particle to the end of the metal oxide particle increases, and the composite particle has a lower resistance due to an increased area where it can react with lithium ions, resulting in improved rate characteristics. From the same viewpoint, the ratio is more preferably 0.6 or more, and still more preferably 0.8 or more.

In the composite particle according to one embodiment of the present invention, it is preferable that the cumulative fine pore volume $V_{200}$ of fine pores having a fine pore diameter of 200 nm or less as calculated by the BJH method using a nitrogen adsorption test, is 0.003 $cm^3$/g or more and 0.150 $cm^3$/g or less.

When the $V_{200}$ is 0.003 $cm^3$/g or more, the composite particle has a lower resistance due to an increased area where it can react with lithium ions, resulting in improved rate characteristics. From the same viewpoint, the $V_{200}$ is more preferably 0.004 $cm^3$/g or more, and still more preferably 0.005 $cm^3$/g or more.

When the $V_{200}$ is 0.150 $cm^3$/g or less, side reactions can be reduced, thereby reducing deterioration of cycle characteristics. From the same viewpoint, the $V_{200}$ is more preferably 0.140 $cm^3$/g or less, and still more preferably 0.135 $cm^3$/g or less.

Here, the cumulative fine pore volume $V_{200}$ is the cumulative fine pore volume at a relative pressure of 0.99 in the nitrogen adsorption test.

The cumulative fine pore volume $V_{200}$ is obtained by analyzing the adsorption isotherm obtained by the nitrogen adsorption test using a known method. The details will be described later.

In the composite particle according to one embodiment of the present invention, it is preferable that the cumulative fine pore volume $V_{3\text{-}200}$ of fine pores having a fine pore diameter of 3 nm or more and 200 nm or less as calculated by BJH method, is 0.003 $cm^2$/g or more.

When the $V_{3\text{-}200}$ is 0.003 $cm^3$/g or more, it contributes to the reaction with the core material (lithium diffusion), resulting in improved rate characteristics. The "core material" is the portion of the composite particle other than the crystalline metal oxide particle, consisting of silicon, carbon, and the fine pores including the pores. From the same viewpoint, the $V_{3\text{-}200}$ is more preferably 0.005 $cm^3$/g or more, and still more preferably 0.020 $cm^3$/g or more.

In the composite particle according to one embodiment of the present invention, it is preferable that the ratio $V_{3\text{-}200}/V_{200}$ of the cumulative fine pore volume $V_{3\text{-}200}$ of fine pores having a fine pore diameter of 3 nm or more and 200 nm or less as calculated by BJH method to the cumulative fine pore volume $V_{200}$ of fine pores having a fine pore diameter of 200 nm or less as calculated by BJH method is 55% or more.

When the ratio is 55% or more, the composite particle has a lower resistance due to an increase in effective area where it can react with lithium ions, resulting in improved rate characteristics. In addition, fine pores smaller than 3 nm are unlikely to contribute to the reaction with lithium ions, leading to increased side reactions and deterioration of initial efficiency and cycle characteristics. From the same viewpoint, the proportion is more preferably 65% or more, and still more preferably 75% or more.

In the composite particle according to one embodiment of the present invention, it is preferable that the 50% particle diameter $D_{V50}$ in a cumulative particle size distribution on a volume basis is 1.0 um or more and 20 um or less.

This is because, when the $D_{V50}$ is 1.0 um or more, side reactions with the electrolytic solution can be reduced. Furthermore, the powder is excellent in handleability, a slurry having a viscosity and a density suited for coating is easily prepared, and the density when made into an electrode is easily increased. From the same viewpoint, $D_{V50}$ is more preferably 2.0 um or more, and still more preferably 3.0 um or more.

Meanwhile, when the $D_{V50}$ is 20 um or less, the composite particle has a lower resistance due to an increased area where it can react with lithium ions, resulting in improved rate characteristics. In addition, expansion and contraction at the time of charging and discharging are reduced in the lithium-ion secondary battery, resulting in improved cycle characteristics. From the same viewpoint, $D_{V50}$ is more preferably 15.0 um or less, and still more preferably 10.0 um or less.

In the composite particle according to one embodiment of the present invention, it is preferable that the 90% particle diameter $D_{V90}$ in a cumulative particle size distribution on a volume basis is 30 um or less.

When the $D_{V90}$ is 30 um or less, expansion and contraction at the time of charging and discharging are reduced in the lithium-ion secondary battery, resulting in improved cycle characteristics. In addition, when applying the composite particle as a slurry to the current collector, stripping and abnormal unevenness are unlikely to occur. From the same viewpoint, the $D_{V90}$ is more preferably 25 um or less, and still more preferably 20 um or less.

The cumulative particle size distribution on a volume basis is measured by, for example, a laser diffraction-type particle size distribution meter, SEM, or cross-sectional SEM.

In the composite particle according to one embodiment of the present invention, the BET specific surface area is preferably 2.0 $m^2$/g or more and 20.0 $m^2$/g or less. When the BET specific surface area is 2.0 $m^2$/g or more, the composite particle has a lower resistance due to an increased area where it can react with lithium ions, resulting in improved rate characteristics. From the same viewpoint, the BET specific surface area is more preferably 2.5 $m^2$/g or more, and still more preferably 3.0 $m^2$/g or more. With the BET specific surface area is 20.0 $m^2$/g or less, side reactions with the electrolytic solution are reduced in the composite particle. From the same viewpoint, the BET specific surface area is more preferably 18.0 $m^2$/g or less, and still more preferably 15.0 $m^2$/g or less.

The BET specific surface area is usually measured by a dedicated measuring apparatus known in the art. Nitrogen is usually used as the adsorption gas, but carbon dioxide, argon, and other gases may also be used.

In the composite particle according to one embodiment of the present invention, it is preferable that a peak is present at 450 to 495 $cm^{-1}$ in the Raman spectrum. Usually, crystalline silicon has a peak in the vicinity of 520 $cm^{-1}$. Since amorphous silicon has a peak at a lower Raman shift, the presence of a peak at 450 to 495 $cm^{-1}$ indicates that the composite particle has amorphous silicon. When silicon is amorphous, expansion and contraction are relatively isotropic at the time of charging and discharging, which can improve the cycle characteristics.

In the composite particle according to one embodiment of the present invention, it is preferable that $I_{Si}/I_G$ is 0.10 or more and 1.30 or less when the intensity of the peak at 450 to 495 $cm^{-1}$ is defined as $I_{Si}$, the intensity of the G band (peak intensity in the vicinity of 1600 $cm^{-1}$) is defined as $I_G$, and the intensity of the D band (peak intensity in the vicinity of 1360 $cm^{-1}$) is defined as $I_D$.

When $I_{Si}/I_G$ is smaller than 0.10, the energy density tends to be low. From the same viewpoint, $I_{Si}/I_G$ is more preferably 0.20 or more, and still more preferably 0.25 or more. When $I_{Si}/I_G$ is larger than 1.30, more silicon is present in the surface layer part in the composite particle, which may result in poor cycle characteristics. From the same viewpoint, $I_{Si}/I_G$ is more preferably 0.80 or less, still more preferably 0.75 or less, and even preferably 0.70 or less.

It is preferable that the R value ($I_D/I_G$), ratio of the intensity of the D band, $I_D$, to the intensity of the G band, $I_G$, in the Raman spectrum, is 1.00 or more and 1.30 or less.

When the R value is 1.00 or more, the composite particle has a lower reaction resistance with lithium ions, resulting in improved rate characteristics. From the same viewpoint, the R value is more preferably 1.03 or more, and still more preferably 1.05 or more.

When the R value is 1.30 or less, there are few defects in the carbon in the composite particle, side reactions with the electrolytic solution are reduced, and deterioration of cycle characteristics is reduced. From the same viewpoint, the R value is more preferably 1.29 or less, and still more preferably 1.28 or less.

The G band in the Raman spectrum is the peak appearing in the vicinity of 1600 $cm^{-1}$ obtained when the carbon material is measured, and the D band is the peak appearing in the vicinity of 1350 $cm^{-1}$ similarly obtained when the carbon material is measured. The "peak intensity" is the height from the baseline to the peak apex after the baseline has been corrected.

In the composite particle according to one embodiment of the present invention, the full width at half maximum of the peak of the (111) plane of Si is 3.0 deg. or more in the XRD pattern (horizontal axis: 2θ, vertical axis: Intensity) measured by powder XRD using a Cu-Kα ray. When the full width at half maximum of the peak of the (111) plane of Si is 3.0 deg. or more, the crystallites are small, which leads to reduction of cracking of silicon in association with charging and discharging. This leads to an improvement in the initial coulombic efficiency and the coulombic efficiency in the lithium-ion secondary battery. From the same viewpoint, the full width at half maximum is preferably 3.5 deg. or more, and more preferably 4.0 deg. or more. In addition, the full width at half maximum is preferably 10.0 deg. or less, more preferably 8.0 deg. or less, and still more preferably 6.0 deg. or less.

In the composite particle according to one embodiment of the present invention, it is preferable that SiC is not present. The presence of SiC in the composite particle significantly reduces the capacity and energy density.

In the composite particle according to one embodiment of the present invention, it is preferable that, (peak intensity of SiC (111) plane)/(peak intensity of Si (111) plane) is 0.01 or less in the XRD pattern measured by powder XRD using a Cu-Kα ray. As a result, SiC (silicon carbide) is not included in the composite particle or the content of SiC is extremely low, and therefore, the utilization rate of silicon as a battery active material is improved and the initial discharge capacity can be increased. The (peak intensity of SiC (111) plane)/(peak intensity of Si (111) plane) is also denoted as $I_{SiC(111)}/I_{Si(111)}$. It is more preferable that the lower limit of $I_{SiC(111)}/I_{Si(111)}$ is 0, that is, the peak intensity of SiC (111) plane is not observed. The peak of SiC (111) plane means the peak appearing in the vicinity of 35 deg. at 2θ derived from SiC. In addition, the peak of Si (111) plane means the peak appearing in the vicinity of 28 deg. at 2θ derived from Si.

The "peak intensity" is the height from the baseline to the peak apex after the baseline has been corrected.

In the composite particle according to one embodiment of the present invention, it is preferable that the oxygen content rate is 0.3% by mass or more and 10.0% by mass or less.

Since pure Si has high activity, it is possible to reduces rapid degeneration of the composite particle by oxidizing part of it to reduce the activity, and since the composite particle includes the metal oxide, it is preferable that the oxygen content rate is 0.3% by mass or more. From the same viewpoint, the oxygen content rate is more preferably 0.4% by mass or more, still more preferably 0.5% by mass or more, particularly preferably 0.6% by mass or more, and most preferably 0.9% by mass or more.

When the oxygen content rate is 10.0% by mass or less, oxidation of silicon can be moderately reduced, thereby reducing the irreversible capacity when used as the negative electrode material. From the same viewpoint, the oxygen content rate is more preferably 7.0% by mass or less, and still more preferably 5.0% by mass or less.

The oxygen content rate is determined by, for example, an oxygen-nitrogen simultaneous analyzer.

In the composite particle according to one embodiment of the present invention, it is preferable that the silicon (Si) content rate is 20% by mass or more and 85% or less.

When the silicon content rate is 20% by mass or more, the amount of silicon in the composite particle is sufficient, and the discharge capacity can be increased. From the same viewpoint, the silicon content rate is more preferably 30% by mass or more, and still more preferably 40% by mass or more.

When the silicon content rate is 85% by mass or less, the silicon content is not excessive, and therefore, the carbon serving as the carrier can absorb a volume change due to expansion and contraction thereof. From the same viewpoint, the silicon content rate is more preferably 80% by mass or less, and still more preferably 75% by mass or less.

The silicon content rate in the composite particle can be obtained by ICP-AES, described later.

The composite particle according to one embodiment of the present invention further has a carbon-containing coating layer on the surface, as well as on some or all of the inner wall surface of pores not in contact with the metal oxide or the inner wall surface of fine pores not filled with silicon. Such a composite particle having a coating layer, that is, a particle composed of the composite particle and the coating layer, will hereinafter be referred to as a "composite particle with coating layer". The structure of this composite particle with coating layer has the characteristics below.

In the composite particle with coating layer, it is preferable that $A_{Si}$ is 0.05 or more and $A_C/(A_C + A_{Si} \times (B_{SiO2} + B_{SiO}))$ is 0.55 or more when the ratios of the number of atoms of Si, O, and C according to the Narrow spectrum of X-ray photoelectron spectroscopy (XPS) are defined as $A_{Si}$, $A_O$, and $A_C$, respectively, and when, among Si species ratios according to Si2p spectral state analysis, the ratios of $SiO_2$ and SiO are defined as $B_{SiO2}$ and $B_{SiO}$, respectively. Note that $A_{Si} + A_O + A_C = 1.00$.

XPS is known as an approach to obtain findings about the types, amounts to be present, and chemical bonding states of elements present on the surface of a substance and in positions down to a few nm in depth from the surface.

$$<1> \quad A_{Si}/(A_{Si} + A_O + A_C)$$

When $A_{Si}/(A_{Si} + A_O + A_C)$ is less than 0.05, the coating layer is too thick, resulting in an increased resistance. $A_{Si}/(A_{Si} + A_O + A_C)$ is preferably 0.15 or more, and still more preferably 0.25 or more. Since the analysis depth of XPS is very shallow, a few nm, the fact that Si can be observed to some extent means that the coating layer is an extremely thin layer.

Since the coating layer includes carbon and oxygen, it has lower electron conductivity than carbon coating. The coating layer needs to be a thin layer because if it is too thick, the resistance will be increased.

$$<2> \quad A_C/(A_C + A_{Si} \times (B_{SiO2} + B_{SiO}))$$

The value of $A_C/(A_C + A_{Si} \times (B_{SiO2} + B_{SiO}))$ is an index of the concentration of carbon on the surface of the composite particle with coating layer and in positions down to a few nm in depth from the surface (depth of spatial resolution of XPS). This is because Si present on the surface of the composite particle with coating layer and in positions down to a few nm in depth from the surface is considered to be present as an oxide such as $SiO_2$ or SiO. However, since $A_C$ includes information about carbon in the carrier as well, this index does not reflect the carbon concentration only for the coating layer.

When the value of $A_C/(A_C + A_{Si} \times (B_{SiO2} + B_{SiO}))$ is less than 0.5, the carbon concentration on the surface of the composite particle and in positions down to a few nm in depth from the surface is low, resulting in low oxidation reduction ability. Therefore, it is preferable that the value is 0.5 or more. It is more preferable that the value is 0.75 or more. It is still more preferable that the value is 0.85 or more. In addition, it is preferable that the value is 0.98 or less. When the value is greater than 0.98, that is, there is too little silicon oxide on the surface and in positions down to a few nm in depth from the surface, and therefore, the oxidation reduction ability is low. Although the structure of the coating layer cannot be specified, the present inventors estimates that it is a thin film layer in which the carbon in the coating layer and silicon oxide are composited.

The value of $A_C/(A_C + A_{Si} \times (B_{SiO2} + B_{SiO}))$ can be changed by, for example, adjusting the reaction temperature, reaction time, reaction pressure, or the type or concentration of unsaturated hydrocarbon in a method for producing the composite particle with coating layer.

It is preferable that the carbon in the coating layer includes a hydrocarbon-derived compound. This can be determined by carrying out pyrolysis GC-MC measurement for the composite particle with coating layer and observing if the gas generated from the composite particle with coating layer between 200°C and 600°C includes a hydrocarbon-derived compound.

The coating layer can be produced by allowing a carbon source having an unsaturated bond to act on the carrier at low temperature and subsequently oxidizing the obtained substance. The details will be described later.

In the composite particle with coating layer according to one embodiment of the present invention, it is preferable that the thickness of the coating layer is thin to the extent that it cannot be substantially measured by cross-sectional observation with an electron microscope. When the thickness of the coating layer is thin as described above, the composite particle with coating layer has low resistance. Scanning electron microscopes (SEM) do not have enough resolution to determine a thickness of a few nm, and therefore, cannot measure the thickness of coating layers that are thinner than that. Although transmission electron microscopes (TEM) have sufficient resolution and can observe even coating layers with a thickness of a few nm, when preparing a thin film sample for TEM observation that includes the coating layer from the composite particle with coating layer, the coating layer of the composite particle with coating layer is damaged and destroyed by the processing, and therefore, TEM cannot observe the thickness of the coating layer. The thickness "cannot be substantially measured" refers to such a state. However, even for thin films that cannot be substantially measured by cross-sectional observation with an electron microscope, the presence of the coating layer can be confirmed by XPS as described above or by a test for hydrophobicity, which will be described later.

In the composite particle with coating layer according to the present invention, the true density is 1.80 g/cm$^3$ or more. This value is calculated by dry density measurement using helium gas.

A true density of less than 1.80 g/cm$^3$ means that the amount of silicon filled into the fine pores of carbon in the composite particle with coating layer is small, or that the coating layer is a thick layer of a low-density organic material such as a tar component or polymer.

A true density of 1.80 g/cm$^3$ or more indicates that the amount of silicon filled into the fine pores of carbon in the composite particle with coating layer is sufficient and that the coating layer is thin, which can increase the specific capacity of the composite particle with coating layer and lower its resistance. From the same viewpoint, the true density is preferably 1.85 g/cm$^3$ or more, and more preferably 1.88 g/cm$^3$ or more.

In the composite particle with coating layer according to the present invention, the true density is 2.30 g/cm$^3$ or less. When the true density is 2.30 g/cm$^3$ or less, the carbon in the composite particle with coating layer is amorphous and the carbon construction is more isotropic. Since it is lower than the literature values for the densities of carbon and silicon, it is considered that there are vacancies in the composite particle with coating layer where helium gas cannot penetrate from outside the particle, and therefore, the cycle characteristics can be enhanced. In addition, the amount of silicon carbide in the composite particle with coating layer is small, which can reduce a reduction in silicon utilization rate. Since silicon carbide has a higher density compared to carbon and Si, the true density is higher when it is included in the composite particle with coating layer. From this viewpoint, the true density is preferably 1.99 g/cm$^3$ or less, and more preferably 1.97 g/cm$^3$ or less.

The true density according to dry density measurement can be measured by the gas phase substitution method. The gas phase substitution method is a method in which the sample and helium gas are placed in a container whose volume has been measured beforehand with helium gas in an environment maintained at a constant temperature, and the true density is calculated from the volume of helium gas pushed away by the sample and the mass of the sample. As an apparatus for the gas phase substitution method, AccuPyc ® II 1340 Gas Pycnometer manufactured by Micromeritics Instrument Corporation can be used, for example.

The coating layer can be formed by allowing an unsaturated hydrocarbon to act on the composite particle (that is, hydrosilylation reaction) at a low temperature of 400°C or lower, and then performing oxidation treatment.

As the unsaturated hydrocarbon, any hydrocarbon can be used as long as it has a double bond or a triple bond. If the hydrocarbon is a compound that has a low vapor pressure and is not gasified at normal pressure, the hydrocarbon may be used at a pressure lower than normal pressure. Preferred examples thereof include acetylene, ethylene, propylene, and 1,3-butadiene, which are gases at normal pressure, and acetylene and ethylene are more preferable. At this time, multiple types of hydrocarbons may be used. Also, an inert gas such as helium or argon, or a reducing gas such as hydrogen may be mixed for use.

It is preferable that the composite particle with coating layer according to one embodiment of the present invention is hydrophobic. When it is hydrophobic, the protective effect against water is improved. In addition, the negative electrode mixture layer includes a polymer that serves as a binder. The polymer has good familiarity with hydrophobic particles, and therefore, more uniform dispersion can be achieved when preparing the slurry for negative electrode coating.

As the method for measuring hydrophobicity, a method in which the osmosis behavior of powder into water is observed is simple and easy to determine hydrophobicity. This measurement can be carried out by, for example, the method described in Examples.

[2] Raw material carbon

The carbon material used as a raw material for the composite particle according to one embodiment of the present invention, that is, "raw material carbon," is not particularly limited as long as it is other than graphite, but is preferably amorphous carbon.

It is also preferable that the raw material carbon becomes porous carbon by activation. The porous carbon is carbon having a total fine pore volume of 0.20 $cm^3/g$ or a BET specific surface area of 200 $m^2/g$ or more. Since the porous carbon is considered to have a high adsorption speed of silane, fine silicon can be precipitated in the fine pores when the composite particle is produced by, for example, CVD using silane gas. Examples of the shape thereof include a particulate shape and a fibrous shape, and a particulate shape is preferable. This is because, when the porous carbon has a particulate shape, the fine pores are isotropically formed, and thus the composite particle isotropically expands and contracts at the time of lithiation and delithiation, resulting in excellent cycle characteristics. In order to expand and contract isotropically, it is preferable that the aspect ratio of the particle is small, and it is still more preferable that the particle has a spherical shape (circular cross-section). Examples of the porous carbon include active carbon. The active carbon is usually amorphous carbon.

In the composite particle according to one embodiment of the present invention, it is preferable that, due to the activation, its raw material carbon becomes to have a cumulative fine pore volume $V_{200}$ corresponding to a fine pore diameter of 200 nm or less of 0.30 $cm^3/g$ or more, as calculated by BJH method. When the $V_{200}$ is 0.30 $cm^3/g$ or more, the amount of silicon inside thereof can be increased, and therefore, the specific capacity of the composite particle can be increased. From this viewpoint, the $V_{200}$ that the raw material carbon has is more preferably 0.50 $cm^3/g$ or more, and still more preferably 0.60 $cm^3/g$ or more. At this time, it is preferable that the ratio $V_{3-200}/V_{200}$ of the cumulative fine pore volume $V_{3-200}$ corresponding to a fine pore diameter of 3 nm or more and 200 nm or less as calculated by BJH method to the cumulative fine pore volume $V_{200}$ corresponding to a fine pore diameter of 200 nm or less as calculated by BJH method is less than 0.3. Since silicon is precipitated more in micropores of less than 3 nm, when the ratio $V_{3-200}/V_{200}$ is less than 0.3, formation of crystalline lithium silicide is reduced when the battery is charged and discharged, and the cycle characteristics are dramatically improved.

In the composite particle according to one embodiment of the present invention, it is preferable that, due to the activation, its raw material carbon becomes to have a BET specific surface area of 200 $m^2/g$ or more. When the BET specific surface area is 200 $m^2/g$ or more, the amount of silicon inside thereof can be increased, and therefore, the specific capacity of the composite particle can be increased. From this viewpoint, the BET specific surface area is more preferably 800 $m^2/g$ or more, and still more preferably 1500 $m^2/g$ or more.

The above raw material carbon is preferably a phenolic resin or copolymer resin of resorcinol and formaldehyde that has been carbonized. Prior to carbonization, the resin may be cured by heat treatment at 150°C to 300°C for 1 to 6 hours. Moreover, after curing, the resin may be crushed to have a particle diameter of approximately 0.5 to 5.0 mm. Preferably, the raw material carbon is produced by carbonizing the above resin by holding it at a temperature of 400°C to 1100°C for 1 to 20 hours in an inert gas atmosphere.

In the composite particle according to one embodiment of the present invention, it is preferable that the raw material carbon has a 50% particle diameter $D_{V50}$ in a cumulative particle size distribution on a volume basis of 1.0 um or more and 20 um or less.

When the $D_{V50}$ is 1.0 um or more, side reactions with the electrolytic solution are reduced in the composite particle. Furthermore, the powder is excellent in handleability, a slurry having a viscosity and a density suited for coating is easily prepared, and the density when made into an electrode is easily increased.

From the same viewpoint, the $D_{V50}$ is more preferably 2.0 um or more, and still more preferably 3.0 um or more. When the $D_{V50}$ is 20.0 um or less, expansion and contraction at the time of charging and discharging are reduced in the battery, resulting in improved cycle characteristics. In addition, as the composite particle has a smaller particle diameter, it has a lower resistance due to an increased area where it can react with lithium ions, resulting in improved rate characteristics. From the same viewpoint, the $D_{V50}$ is more preferably 15.0 um or less, and still more preferably 10.0 um or less.

Unless the raw material carbon is subjected to an intense pulverization step or classification step, the $D_{V10}$, $D_{V50}$, and $D_{V90}$ are almost the same for both the carbon material after activation and the composite particle after silicon precipitation.

Even after the composite particle is obtained, silicon can be eluted by performing an appropriate treatment to obtain the carbon material after activation. As a result, the physical property values of the carbon material after activation can be examined even from the state of the composite particle. For example, the above $D_{V50}$, cumulative fine pore volumes $V_{200}$ and $V_{3-200}$, and BET specific surface area can be examined.

[3] Method for producing composite particle

The composite particle according to one embodiment of the present invention can be produced by, for example, the following steps (1), (2), and (3), but the present invention is not limited thereto.

Step (1): A step of coating raw material carbon or a resin that turns into raw material carbon by heating in an inert atmosphere in step (2) described below with a metal oxide or a metal oxide precursor.

Step (2): A step of heating a material obtained in the step (1), which has been coated with the metal oxide or metal oxide precursor, in an inert atmosphere, followed by activation to obtain a carbon material having pores formed by an action of the metal oxide and fine pores due to the activation.

It is preferable for the carbon material that $0.02 < V_{3-200}/V_{200} < 0.40$ is satisfied and the BET specific surface area is 800 $m^2/g$ or more when the cumulative fine pore volume of fine pores having a fine pore diameter of 200 nm or less as calculated by BJH method is defined as $V_{200}$, and when the cumulative fine pore volume of fine pores having a fine pore diameter of 3 nm or more and 200 nm or less as calculated by BJH method is defined as $V_{3-200}$ in a nitrogen adsorption test.

When $V_{3-200}/V_{200}$ is less than 0.40, excess voids in the composite particle obtained in the later step can be reduced and the energy density can be increased. From the same viewpoint, $V_{3-200}/V_{200}$ is more preferably less than 0.35, and still more preferably less than 0.30. When $V_{3-200}/V_{200}$ is more than 0.02, the proportion of fine pores of 3 nm or more in the composite particle obtained in the later step is increased. From the same viewpoint, $V_{3-200}/V_{200}$ is more preferably more than 0.03, and still more preferably more than 0.05.

Step (3): A step of allowing a Si-containing gas to act on the carbon material, which has been heated, to precipitate a Si-containing compound on the surface and in fine pores of the carbon material, thereby obtaining a composite particle including porous carbon and silicon.

(Step (1))

The step (1) is a step of coating the raw material carbon or the resin that turns into raw material carbon by heating in an inert atmosphere in step (2) described later with a metal oxide or a metal oxide precursor. The coating layer formed by the metal oxide or metal oxide precursor may have a sea-island structure scattered like islands on the surface of the raw material carbon, or it may uniformly cover the surface. The step (1) can include the steps of preparing a solution including at least one of metal oxide precursors selected from metal alkoxides and metal complexes (including chelate complexes as well) and a solvent, and spraying the solution onto the raw material carbon or the resin that turns into raw material carbon by heating in an inert atmosphere in step (2) described later, that has been made into a fluid state. At this time, it is preferable that the coating rate of the coating layer is 10% or more, since the proportion of the area of pores on the surface of the composite particle, described below, will be 5% or more. From the same viewpoint, the coating rate of the coating layer is more preferably 15% or more, and still more preferably 20% or more.

As the above resin, a phenolic resin and a copolymer resin of resorcinol and formaldehyde are preferable.

The metal oxide precursor is at least one selected from metal alkoxides and metal complexes (including chelate complexes as well), and preferably one that is stably dissolved in the solvent. Specifically, examples thereof include titanium(IV) tetraisopropoxide, pentaethoxyniobium(V), vanadium(V) oxytriisopropoxide, aluminum(III) triisopropoxide, yttrium(III) triisopropoxide, cerium(III) triisopropoxide, and ethoxylithium.

The solvent is selected from water and organic solvents, and not particularly limited as long as it can dissolve the metal oxide precursor without reacting with it, but solvents with a boiling point of around 100°C, such as ethanol, isopropyl alcohol, butanol, hexane, and toluene, are preferable.

The concentration of the metal oxide precursor in the precursor solution is preferably 3% by mass or more. By making the concentration of the precursor 3% by mass or more, productivity is improved. From the same viewpoint, the concentration of the precursor is more preferably 5% by mass or more, and still more preferably 10% by mass or more. The concentration of the precursor is preferably 50% by mass or less. When the concentration is too high, the coating rate is reduced. From the same viewpoint, the concentration of the precursor is more preferably 40% by mass or less, and still more preferably 35% by mass or less.

The method for making the raw material carbon or the resin that turns into raw material carbon in step (2) described later into a fluid state is not particularly limited, and examples thereof include a method using a rolling fluidized bed or a swirling fluidized bed, and a method using the rolling fluidized bed is preferable. Examples of apparatuses for the rolling fluidized bed include the MP series, manufactured by Powrex Corporation.

When the rolling fluidized bed is used, an air supply temperature during operation is preferably a temperature of "the boiling point of the organic solvent - 10°C" or higher. This range makes it easier to maintain fluidity.

When the rolling fluidized bed is used, the operation is preferably performed under a low humidity atmosphere. Examples of the low humidity atmosphere include a nitrogen gas atmosphere, an argon gas atmosphere, and the atmosphere with a humidity of 25% or lower.

The air supply quantity of the rolling fluidized bed is not limited, but conditions that allow complete fluidization of the raw material carbon or the resin that turns into raw material carbon in step (2) described later are preferable.

The method for spraying the precursor solution onto the raw material carbon is not particularly limited, and examples thereof include a method using a tube pump and a spray nozzle.

By subjecting the above coated raw material carbon or the resin that turns into raw material carbon in step (2) described later to heat treatment or sol-gel reaction, the coated metal oxide precursor layer can be made into a metal oxide layer, but the heat treatment or sol-gel reaction may or may not be performed, since the next step will result in a crystalline metal oxide particle.

(Step (2))

The step (2) is a step of heating a material obtained in the step (1), which has been coated with the metal oxide or metal oxide precursor, in an inert atmosphere, followed by activation to obtain a carbon material having pores formed by an action of the metal oxide and fine pores due to the activation.

The step (2) may include the steps of raising the temperature of the material obtained in the step (1), which has been coated with the metal oxide or metal oxide precursor, in an inert atmosphere to 700°C to 1100°C, and then switching to an activation gas such as $CO_2$ gas or water vapor gas and holding that temperature for 1 to 20 hours. At this time, the coated metal oxide precursor layer becomes a crystalline metal oxide particle, which reacts with the raw material carbon and erodes inside the raw material carbon. In this process, a continuous pore with a diameter approximately the same as that of the metal oxide particle is formed from the surface of the raw material carbon toward the inside, forming a structure in which the crystalline metal oxide particle is present at the innermost section of the pore. The presence of the crystalline metal oxide particle at the innermost section of the pore can reduce the concentration of electric current at the innermost section of the pore, thereby reducing degradation originating from the innermost section of the pore. In addition, the metal oxide being crystalline can enhance lithium ion conductivity, allowing the reaction with lithium ions even in locations where the metal oxide is present, resulting in improved rate characteristics. Moreover, by the activation, fine pores having a fine pore diameter of less than 3 nm are developed in the raw material carbon, resulting in a porous carbon material having different fine pore diameters, large and small.

The diameter of the crystalline metal oxide particle varies depending on the oxide species, type of precursor, state of coating, surface condition of the raw material carbon, heating temperature, and other factors, but the oxide species has a large effect, and it is necessary to select the oxide species appropriately in order to obtain a composite material having the targeted pore size.

The erosion speed of the crystalline metal oxide particle to the inside of the raw material carbon varies depending on the oxide species, activation temperature, and raw material carbon, and the depth of the pore formed is proportional to the activation time. On the other hand, in order to obtain a composite particle with the targeted silicon content rate, a sufficient amount of fine pores having a diameter of less than 3 nm need to be formed in the raw material carbon, and therefore, it is necessary to prioritize the conditions for the activation of the raw material carbon and then appropriately select an oxide species that forms the targeted pore depth under those conditions.

(Step (3))

Step (3) is a step of allowing a Si-containing gas to act on the carbon material, which has been heated, to precipitate a Si-containing compound on the surface and in fine pores of the carbon material, thereby obtaining a composite particle including porous carbon and silicon. The step (3) can include a step of allowing a Si-containing gas, preferably silane gas, to act on the carbon material, which has been heated, to cause thermal decomposition of the Si-containing gas in fine pores of the carbon material, thereby precipitating a Si-containing compound in fine pores and on the surface of the carbon material to obtain a composite particle.

For example, when the carbon material is placed in the chamber of a CVD apparatus and silane gas is allowed to act on the carbon material in a heated state, silane enters the inside of fine pores of the carbon material, which is further thermally decomposed, thereby precipitating silicon in the fine pores of the carbon material. As the method for this, the apparatus and method described in U.S. Patent No. 10424786, for example, can be used.

It is preferable that silicon is present in fine pores of the carbon material since the durability against the stress in the composite particle caused by the expansion and contraction of silicon in association with charging and discharging of the battery is enhanced. Furthermore, it is preferable that the diameter of fine pores where silicon is precipitated is less than 3 nm. Silicon precipitated in fine pores having a diameter of less than 3 nm reduces formation of crystalline lithium silicide at the time of charging and discharging, resulting in dramatically improved cycle characteristics. From this viewpoint, it is preferable that the carbon material is a porous carbon material having a large number of fine pores having a diameter of less than 3 nm.

Examples of the Si-containing gas used include disilane gas and trisilane gas in addition to silane ($SiH_4$) gas.

Moreover, the Si-containing gas may include other gases, and for example, gases such as nitrogen, argon, helium, and hydrogen may be mixed as the carrier gas. Various conditions of CVD, such as gas composition ratio, gas flow rate, temperature program, and fixed bed/fluidized bed selection, can be adjusted as appropriate while observing the nature of the product.

In the case where silane gas is used, the treatment temperature is 340°C to 450°C, more preferably 350°C to 420°C, and still more preferably 370°C to 400°C. This temperature range allows silicon to be preferentially precipitated in fine pores having a diameter of less than 3 nm in the carbon material, and a composite particle can be obtained that retains the state where silicon is not precipitated in the pores formed by the action of the crystalline metal oxide particle.

In the case where silane gas is used, it is preferable that the pressure in the furnace at the time of silicon precipitation is 1500 Torr or less. A pressure of 1500 Torr or less in the furnace allows silicon to be preferentially precipitated in fine pores having a diameter of less than 3 nm, and a composite particle can be obtained that retains the state where silicon is not precipitated in the pores having a diameter of 3 nm or more, formed by the action of the crystalline metal oxide particle. From the same viewpoint, the pressure in the furnace is more preferably 1000 Torr or less, and more preferably 900 Torr or less.

The treatment time of the step (3) is determined by analyzing the treatment gas or the gas generated by the reaction in real time. The treatment is stopped when the concentration of the treatment gas rises sharply or when the concentration of the gas generated by the reaction falls sharply. When the treatment is continued, the Si-containing compound begins to be precipitated in the pores having a diameter of 3 nm or more, formed by the action of the crystalline metal oxide particle, and the pores are eventually filled by the Si-containing compound.

Alternatively, after the Si-containing compound is precipitated in fine pores and on the surface of the carbon material to obtain a composite particle, the composite particle may be brought into contact with an inert gas atmosphere containing oxygen to oxidize part of the Si-containing compound. In particular, since pure Si has high activity, it is possible to reduce rapid degeneration of the composite particle by oxidizing part of it.

[4] Negative electrode active material

A negative electrode active material according to one embodiment of the present invention includes the composite particle. Two or more types of the composite particles may be mixed and used. The negative electrode active material may further include other components. Examples of the other components include those generally used as a negative electrode active material for lithium-ion secondary batteries. Examples thereof include graphite, hard carbon, soft carbon, lithium titanate ($Li_4Ti_5O_{12}$), alloy-based active materials such as silicon and tin, and composite materials thereof. These components are usually used in the form of particles. The components other than the composite particle may be used alone or in combination of two or more types thereof. Among them, in particular, graphite particles and hard carbon are preferably used.

When the negative electrode active material is formed by including other components, the composite particle is adjusted to 1 to 50% by mass in the negative electrode active material. It is preferably adjusted to 2 to 25% by mass. By mixing and using another carbon material and a conductive auxiliary agent, it is possible to obtain a negative electrode active material having excellent characteristics of the other carbon material while maintaining the excellent characteristics of the composite particle. When multiple types of materials are used as the negative electrode active material, the materials may be mixed in advance and then used, or may be sequentially added when a slurry for forming a negative electrode mixture, which will be described later, is prepared.

As an apparatus for mixing the composite particle and other materials, a commercially available mixer or stirrer can be used. Specific examples thereof include mixers such as a mortar, a ribbon mixer, a V-type mixer, a W-type mixer, a one blade mixer, and a Nauta mixer.

[5] Negative electrode mixture layer

A negative electrode mixture layer according to one embodiment of the present invention includes the negative electrode active material described in the above [4]. The negative electrode mixture layer of the present invention can be used as a negative electrode mixture layer for lithium-ion secondary batteries. The negative electrode mixture layer generally includes a negative electrode active material, a binder, and a conductive auxiliary agent as an optional component.

As the method for producing the negative electrode mixture layer, a known method as will be described below can be used, for example. A negative electrode active material, a binder, a conductive auxiliary agent as an optional component, and a solvent are used to prepare a slurry for forming a negative electrode mixture. The slurry is applied to a current collector such as copper foil and dried. By further vacuum drying this, the solvent is removed. The obtained product may be referred to as negative electrode sheet. The negative electrode sheet includes a negative electrode mixture layer and the current collector. The negative electrode sheet is cut or punched out into a desired shape and size, and then pressed to improve the density of the electrode mixture layer (sometimes referred to as electrode density). Improving the electrode density improves the energy density of the battery. The pressing method is not particularly limited as long as the electrode can be processed to have the desired electrode density, and examples thereof include uniaxial-pressing and roll-pressing. In Examples described later, the step of carrying out the pressing after the shape processing is illustrated, but the shape processing may be performed after the pressing. In the present invention, this material having the desired shape and electrode density is referred to as a negative electrode. The negative electrode also includes a current collector with a current collector tab attached, as necessary.

Any binder generally used in the negative electrode mixture layer for lithium-ion secondary batteries can be freely selected and used as the binder. Examples thereof include polyethylene, polypropylene, ethylene-propylene terpolymer, butadiene rubber, styrene-butadiene rubber (SBR), butyl rubber, acrylic rubber, polyvinylidene fluoride (PVdF), polytetrafluoroethylene (PTFE), polyethylene oxide, polyepichlorohydrin, polyphosphazene, polyacrylonitrile, carboxymethyl cellulose (CMC) and salts thereof, polyacrylic acid, and polyacrylamide. The binder may be used alone or in combination of two or more types thereof. The amount of the binder is preferably 0.5 to 30 parts by mass based on 100 parts by mass of the negative electrode material.

The conductive auxiliary agent is not particularly limited as long as the conductive auxiliary agent plays a role in imparting electron conductivity and dimensional stability (buffering action on volume change in association with intercalation and deintercalation of lithium) to the electrode. Examples thereof include carbon nanotubes, carbon nanofibers, vapor grown carbon fibers (for example, "VGCF ®-H" manufactured by Showa Denko K.K.), conductive carbon black (for example, "DENKA BLACK ®" manufactured by Denka Company Limited, "Super C65" manufactured by Imerys Graphite & Carbon, and "Super C45" manufactured by Imerys Graphite & Carbon), and conductive graphite (for example, "KS6L" manufactured by Imerys Graphite & Carbon, and "SFG6L" manufactured by Imerys Graphite & Carbon). Multiple types of these may be used.

It is preferable that the conductive auxiliary agent includes carbon nanotubes, carbon nanofibers, and vapor grown carbon fibers, and it is preferable that the fiber length of these conductive auxiliary agents is 1/2 or more of $D_{v50}$ of the composite particle. When the fiber length is a length in this range, these conductive auxiliary agents bridge between the negative electrode active materials including the composite particle, and the cycle characteristics can be improved. Furthermore, the use of single-wall type or multi-wall type carbon nanotubes with a fiber diameter of 15 nm or less is more preferable compared to the use of those with a larger fiber diameter, since the number of bridges is increased with the same amount to be added. In addition, since they are more flexible, they are more preferable from the viewpoint of improving the electrode density.

The amount of the conductive auxiliary agent when preparing the slurry for electrode coating is preferably 1 to 30 parts by mass based on 100 parts by mass of the negative electrode material.

The solvent for preparing the slurry for electrode coating is not particularly limited, and examples thereof include N-methyl-2-pyrrolidone (NMP), dimethylformamide (DMF), isopropanol, tetrahydrofuran (THF), and water. In the case of a binder using water as the solvent, it is also preferable to use a thickening agent in combination. The amount of the solvent can be adjusted so that the slurry achieves such viscosity that the slurry is easily applied onto a current collector.

[6] Lithium-ion secondary battery

A lithium-ion secondary battery according to the present invention includes the negative electrode mixture layer. The lithium-ion secondary battery usually includes a negative electrode including the negative electrode mixture layer and a current collector, a positive electrode including a positive electrode mixture layer and a current collector, at least one of a nonaqueous electrolytic solution and a nonaqueous polymer electrolyte present therebetween, a separator, and a battery case accommodating these components. As long as the lithium-ion secondary battery includes the negative electrode mixture layer, other configurations including conventionally known configurations can be employed without particular limitation.

The positive electrode mixture layer usually includes a positive electrode material, a conductive auxiliary agent, and a binder. The positive electrode in the lithium-ion secondary battery may have a general configuration in a typical lithium-ion secondary battery.

The positive electrode material is not particularly limited as long as electrochemical lithium intercalation and deintercalation can be reversibly performed and the oxidation-reduction potential of these reactions is sufficiently higher than the standard oxidation-reduction potential of the negative electrode reaction. For example, $LiCoO_2$, $LiNiO_2$, $LiMn_2O_4$, $LiCo_{1/3}Mn_{1/3}Ni_{1/3}O_2$, $LiCo_{0.6}Mn_{0.2}Ni_{0.2}O_2$, $LiCo_{0.8}Mn_{0.1}Ni_{0.1}O_2$, carbon-coated $LiFePO_4$, or a mixture thereof can be suitably used.

As the conductive auxiliary agent, the binder, and the solvent for preparing the slurry, those described in the section of the negative electrode can be used. Aluminum foil is suitably used as the current collector.

Those known as the electrolytic solution for lithium-ion secondary batteries can be used as the nonaqueous electrolytic solution and nonaqueous polymer electrolyte used in the lithium-ion battery. For example, those in which lithium salts such as $LiClO_4$, $LiPF_6$, $LiAsF_6$, $LiBF_4$, $LiSO_3CF_3$, and $CH_3SO_3Li$ are dissolved in the following solvents or polymers are used. Examples of the solvent include a nonaqueous solvent such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, and γ-butyrolactone; a gel polymer containing, for example, polyethylene oxide, polyacrylonitrile, polyvinylidene fluoride, and polymethyl methacrylate; and a polymer having an ethylene oxide bond.

In addition, a small amount of an additive generally used in the electrolytic solution for lithium-ion batteries may be added to the nonaqueous electrolytic solution. Examples of the substance include vinylene carbonate (VC), biphenyl, propanesultone (PS), fluoroethylene carbonate (FEC), and ethylene sultone (ES). Preferred examples thereof include VC and FEC. The amount to be added is preferably 0.01 to 20% by mass based on 100% by mass of the nonaqueous electrolytic solution.

The separator can be freely selected from materials that can be used in general lithium-ion secondary batteries, including combinations thereof, and examples thereof include microporous films made of polyethylene or polypropylene. In addition, it is also possible to use a separator obtained by mixing particles such as $SiO_2$ or $Al_2O_3$ as fillers into such a separator, or a separator obtained by attaching the particles to the surface of such a separator.

The battery case is not particularly limited as long as it can accommodate the positive electrode, the negative electrode, the separator, and the electrolytic solution. In addition to those standardized in the industry such as commercially available battery packs, 18650 cylindrical cell, and coin-shaped cells, the battery case, including those packed with aluminum packaging material, for example, can be freely designed and used.

The electrodes may be stacked and packed for use. Also, single cells can be connected in series and used as a battery or module.

The lithium-ion secondary battery according to the present invention can be used as a power source for electronic devices such as smartphones, tablet PCs, and mobile information terminals; a power source for electric motors such as electric tools, vacuum cleaners, electric bicycles, drones, and electric vehicles; and storage of electric power obtained by, for example, fuel cells, solar power generation, and wind power generation.

Examples

Hereinafter, the present invention will be specifically described with reference to Examples and Comparative Examples, but the present invention is not limited to these Examples. The material properties were measured and the battery characteristics were evaluated as follows.

[1] Evaluation of material characteristics

[1-1] $D_{V10}$, $D_{V50}$, $D_{V90}$ (particle size distribution measurement)

One ultra-small spatula of the sample and two drops of a 100-fold diluted solution of an undiluted solution (32% by mass) of a nonionic surfactant (Yashinomi Hi-power Detergent manufactured by Saraya Co., Ltd.) were added to 15 mL of water, followed by ultrasonic dispersion for 3 minutes. This dispersion was charged into a laser diffraction-type particle size distribution analyzer (LMS-2000e) manufactured by Seishin Enterprise Co., Ltd., and a cumulative particle size distribution on a volume basis was measured to determine the 10% particle diameter $D_{V10}$, 50% particle diameter $D_{V50}$, and 90% particle diameter $D_{V90}$.

[1-2] BET specific surface area and fine pore volume (nitrogen adsorption test)

Using NOVA $^®$ 4200e manufactured by Quantachrome Instruments as the measuring apparatus, the sample was placed in a sample cell (9 mm × 135 mm) so that the total surface area of the sample was 2 to 60 $m^2$, dried at 300°C under vacuum conditions for 1 hour, the sample weight was measured, and the measurement was carried out. Nitrogen was used as the gas for measurement.

During the measurement, the set minimum relative pressure was 0.005 and the set maximum relative pressure was 0.995. The BET specific surface area of the carbon material and the composite particle was calculated by the BET multipoint method from adsorption isotherm data at a relative pressure of around 0.005 to less than 0.08. The BET specific surface area of the composite particle was calculated by the BET multipoint method from adsorption isotherm data at three points at a relative pressure of around 0.1, around 0.2, and around 0.3. The cumulative fine pore volume $V_{200}$ was determined by calculating the adsorption amount at a relative pressure of 0.99 (fine pore diameter of 200 nm in BJH method) by linear approximation from adsorption isotherm data at two points around a relative pressure of 0.99. In addition, the cumulative fine pore volume of fine pores having a fine pore diameter of 3 nm or more and 200 nm or less as determined by BJH method was used as the $V_{3-200}$. At this time, the calculation was performed with a nitrogen liquid density of 0.808 ($g/cm^3$), a 1 mol volume of nitrogen in the standard state of 22.4133 L, and a nitrogen atomic weight of 14.0067.

The ratio $V_{3-200}/V_{200}$ of $V_{3-200}$ to $V_{200}$ was also calculated.

[1-3] Oxygen content rate

Into a nickel capsule, 20 mg of the sample was weighed and an oxygen-nitrogen analyzer EMGA ®-920 (manufactured by HORIBA, Ltd.) was used to calculate the oxygen content rate in the composite particle in the unit of % by mass.

[1-4] Content rate of silicon and elements such as metals (ICP-AES analysis)

Into a platinum crucible, 10 mg of the sample was weighed, potassium sodium carbonate and boric acid were added thereto, the mixture was melted by a gas burner, immersed while heating in ultrapure water, and then cooled, and a 30% by mass hydrogen peroxide solution, a citric acid aqueous solution, and sulfuric acid were added thereto to completely dissolve the melt. The solution was washed into a PTFE measuring flask, and Yb, Cd, and Ga standard solutions were added thereto such that the volume of the solution was adjusted to 250 mL. The solution after volume determination was quantitatively analyzed by ICP-AES Agilent 5110 (Agilent technology). The measurement was carried out at n = 2, and the average value thereof was employed.

[1-5] Identification of metal oxide (powder X-ray diffraction measurement (powder XRD))

The sample was filled in a glass sample plate (window length and width: 18 mm × 20 mm, depth: 0.2 mm), and measurement was carried out by the following method.

XRD apparatus: SmartLab ® manufactured by Rigaku Corporation
X-ray source: Cu-Ka ray
Kβ ray removal method: Ni filter
X-ray output: 45 kV, 200 mA
Measuring range: 10.0 to 80.0°
Scan speed: 10.0°/min

The obtained XRD pattern was subjected to background removal, removal of Kα2 component, and smoothing using analysis software (PDXL2, manufactured by Rigaku Corporation), and then subjected to profile fitting to identify the metal oxide and to determine the peak position, intensity, and full width at half maximum. The Si (111) plane has a diffraction peak in the vicinity of $2\theta = 28°$, and the SiC (111) plane has a diffraction peak in the vicinity of $2\theta = 35°$.

[1-6] Image analysis by SEM

Sampling was performed with a small spatula from well-mixed powder of the composite particle, the sample was loaded on carbon tape, and in the case of particle observation, observation was performed as it was. In the case of cross-sectional observation, the sample was embedded in a resin, which was then polished and cross-sectioned using CROSS SECTION POLISHER ® manufactured by JEOL Ltd. for observation. The observation, measurement, and analysis were carried out using the following method.

SEM: scanning electron microscope: Regulus ® 8220 (manufactured by Hitachi High-Tech Science Corporation)
Acceleration voltage: 1 to 3 kV
Focal distance: 1.5 to 3.0 mm
Observation mode: SE+BSE(U) (surface observation), LA100(U) (cross-sectional observation)
Observation magnification: 10,000 to 100,000 times (magnification that allows clear confirmation of the targeted subject)

(Average value (L1) of distance from outermost surface position of composite particle to end of metal oxide particle)

As shown in Figure 1, the method described above was used to measure the distance between the tangent line of the composite particle and the tangent line that is parallel to it and is tangent to the end of the metal oxide particle (the whiter portion) present inside the composite particle, and the minimum value thereof was taken as L. The measured value was calculated from the scale of the scale bar. The average value over 100 freely-selected fields of view in which the metal oxide particle was observed was taken as the average value (L1) of the distance from the outermost surface position of the composite particle to the end of the metal oxide particle. In the case where multiple metal oxide particles were observed in one field of view, the largest value was employed as L1 in that field of view. The same particle was measured in up to one field of view. In addition, when the metal oxide particle is present within a distance of 5% of the circle equivalent diameter from the center of gravity of the observed composite particle cross-section, one half of the particle cross-sectional diameter was used as the above distance. Here, the "cross-sectional diameter" in the cross-sectional SEM image of the composite particle is the diameter of the cross-section of an individual particle obtained by cross-sectional SEM observation of the composite particle, and is the circle equivalent diameter calculated from the cross-sectional area of the particle using image analysis software such as ImageJ.

(Diameter $D_{S50}$ of metal oxide particle)

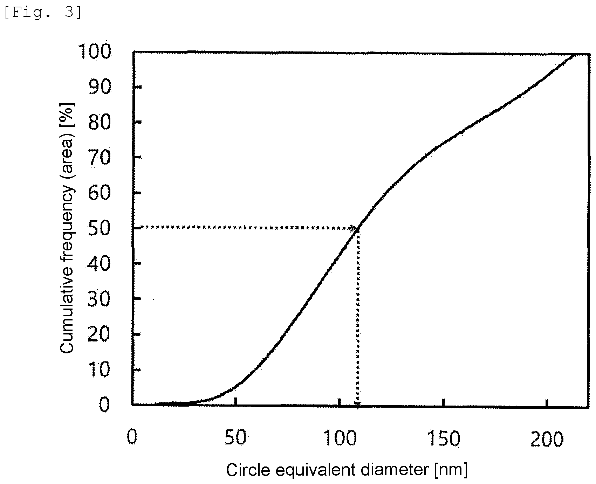

As shown in Figure 2, the obtained cross-sectional SEM images were binarized so that only the metal oxide particle was extracted in white, and the area S of each individual white continuous single region was determined for all of them in the field of view. The same operation was carried out for 100 freely-selected fields of view in which the metal oxide particle was observed, and the cumulative frequency was calculated for each area as shown in Figure 3, and the circle equivalent diameter $((S/\pi)^{1/2})$ at a cumulative frequency of 50% was determined.

The specific method is as follows. The acquired SEM image was opened in Photoshop (manufactured by Adobe Inc.), "Image / Mode / Analysis" was selected, "Set Measurement Scale / Custom" in the measurement log was selected, and the value of the scale bar in the SEM image and the pixel length at that time were entered. Next, areas other than the band section in the SEM image were selected and "Image / Crop" was performed. Thereafter, "Filter / Blur / Gaussian Blur" was selected and the radius (R) was set to 1.0 pixel. Furthermore, "Image / Adjustments / Threshold" was selected, and the threshold value was adjusted so that only the metal oxide was extracted in white. In the case where the auto contrast of the SEM was used for photographing, it was around 170. Subsequently, "Magic Want Tool" was selected, the tolerance was set to 1, and Anti-Alias and Adjacent were unchecked. In that state, a white region was clicked, and all individual continuous single regions were automatically selected. In that state, "Record Measurements" in the measurement log was selected, and the area of all white regions was calculated and output for each field of view.

The calculation of the diameter by binarizing the SEM images may be performed by using another software, or it may be determined by, for example, a composition-analyzed image.

(Average value $D_{A,S}$ of diameter of pores)

For the SEM image of the composite particle surface shown in Figure 4, binarization was carried out so that only pores were extracted in black, as shown in Figure 5, and the area S of each individual black continuous single region was determined for all of them in the field of view. The same operation was carried out for 100 freely-selected fields of view in which the metal oxide particle was observed, and the cumulative frequency was calculated for each area as shown in Figure 3, and the circle equivalent diameter $((S/\pi)^{1/2})$ at a cumulative frequency of 50% was determined. The specific method is equivalent to the method used to calculate the diameter of the metal oxide, but the threshold for binarization was around 90 in the case where the auto contrast of the SEM was used for photographing. Although the average value of the diameter of the metal oxide particle and the average value of the diameter of the pores take close values, they do not coincide exactly since the average value of the diameter of the metal oxide particle is calculated from the cross-sectional SEM images and the pores may be connected to each other or the pores may become smaller at the time of silicon precipitation. In addition, the fine pore diameter determined by BJH method in the nitrogen adsorption isotherm curve is smaller than the actual pore diameter, and therefore, the average value of the pore diameter observed from the SEM images and the fine pore diameter determined from the nitrogen adsorption isotherm curve do not necessarily coincide.

(Average value of proportion of area of pores on surface)

The average value of the proportion of the area of pores on the surface was determined by calculating the proportion of the area of black regions based on the area of observed region from the binarized SEM image, which is carried out when determining the diameter of the pores. The magnification was adjusted so that only the particle fell within the field of view, and the same operation was carried out for 100 freely-selected fields of view to calculate the average value.

(Average value (L2) of depth from outermost surface position of pores having pore diameter of 10 nm or more)

In the same manner as when determining the distance from the outermost surface position of the composite particle to the end of the metal oxide particle, the distance was measured between the tangent line of the composite particle and a line that is parallel to it and is tangent to the tip of the pore with a pore diameter of 10 nm or more, and the minimum value thereof, L, was determined. The measured value was calculated from the scale of the scale bar. The average value for 100 freely-selected fields of view in which fine pores having a pore diameter of 10 nm or more were observed was employed. In the case where multiple pores having a pore diameter of 10 nm or more were observed in one field of view, the largest value was employed as the representative value in that field of view. In addition, the same particle was measured in up to one field of view. As the pore diameter, the largest value in terms of the size of opening of continuous pores was employed. In addition, in the case where the metal oxide particle is present at the innermost section of the pore, the depth was defined as the distance from the outermost surface position of the composite particle to the end of the metal oxide particle. The depth and the distance from the outermost surface position of the particle to the end of the metal oxide particle are almost equal in principle, and when the average value of the distance from the outermost surface position of the particle to the end of the metal oxide particle was defined as (L1) and the average value of the distance to the innermost section of the pore with a pore diameter of 10 nm or more was defined as (L2), then (L1)/(L2) takes a value close to 1. However, (L1)/(L2) becomes smaller in the case where the carbon material has voids inside from the beginning. Then, the smaller this value is, the more pores having a pore diameter of 10 nm or more are present, other than due to the action of the metal oxide particle (that is, no metal oxide is present at the innermost section of the pore), which leads to deterioration of cycle characteristics.

[1-7] Raman $I_{Si}/I_G$, R value ($I_D/I_G$)

The measurement was carried out under the following conditions.

Microscopic Raman spectroscopic measuring apparatus: LabRAM ® HR Evolution manufactured by HORIBA, Ltd.
Excitation wavelength: 532 nm
Exposure time: 10 seconds
Integration: 2 times
Diffraction gratings: 300/mm (600 nm)
Measurement sample: The composite particle is placed on a glass preparation using a spatula so that the powder was uniformly spread. The range in which the sample was spread was made wider than the measurement range described below.
Measurement range: length 80 um $\times$ width 100 $\mu$m, only the composite particle was spread in the measurement range.
Number of points: 100 points were measured with a vertical feed of 17.8 um and a horizontal feed of 22.2 um, and a spectrum obtained by averaging them was obtained and the following analysis was performed.

The peak at 450 to 495 cm$^{-1}$ in the Raman spectrum was observed. The intensity of this peak was defined as $I_{Si}$ and the ratio thereof to the peak intensity in the vicinity of 1580 cm$^{-1}$, ($I_G$), was defined as ($I_{Si}/I_G$). The ratio of the peak intensity in the vicinity of 1350 cm$^{-1}$, ($I_D$), to the peak intensity in the vicinity of 1580 cm$^{-1}$, ($I_G$), in the Raman spectrum was defined as the R value ($I_D/I_G$). The height from the baseline to the peak top was taken as the intensity.

[1-8] X-ray photoelectron spectroscopy (XPS)

Using a small spatula, the sample was placed on the adhesive side of a double-sided tape attached onto a Si substrate, spread uniformly so as not to expose the underlying double-sided tape, and lightly pressed down with the small spatula so that the measurement surface was flat to some extent. The range over which the sample was spread was made wider than the measurement range (about 100 $\mu$m$\varphi$). This was to ensure that only the composite particle was spread in the measurement range. For this sample, the measurement was carried out by the following method.

[Measuring apparatus]

Apparatus: PHI Quantera II (manufactured by ULVAC-PHI, INCORPORATED.)
X-ray source: Al monochrome (25 W, 15 kV)
Analytical range: $\varphi$100 $\mu$m
electron and ion neutralization guns: ON
Photoelectron detection angle: 45 degrees
Narrow scan
Pass Energy: 55 eV Step: 0.2 eV Dwell: 20 ms
Sweep time: O (25 times) C, Si (50 times)

[Analytical method]

[Energy correction]

For the Narrow spectrum, correction was made so that the 1s peak of carbon is at 284.6 eV.

[Ratios $A_C$, $A_O$, and $A_{Si}$ of number of atoms of C, O, and Si]

The area ratios of C, O, and Si in the Narrow spectrum were calculated as ratios of the number of atoms. The sum of all ratios $A_C$, $A_O$ and $A_{Si}$ of the number of atoms of C, O and Si was set to 1.00.

[Si species state ratios $B_{SiO2}$, $B_{SiO}$, and $B_{Si}$]

For the Si 2p Narrow spectrum, peak fitting was carried out using the following method to calculate the Si species state ratios $B_{SiO2}$, $B_{SiO}$, and $B_{Si}$.

(Chemical shift) Si zero-valent = 99 eV, Si divalent = 101 eV, Si tetravalent = 103 eV

(Peak fitting method) The full width at half maximum and the peak top were automatically adjusted by analysis software so that the residual difference between the peak fitting result and the measurement result was minimized. The adjustment of the peak tops was carried out with a width of $\pm 0.5$ eV for all three width components. The analysis software used was the software accompanying the above measuring apparatus.

- Background subtraction method: Shirley method
- Function: Gauss-Lorentz

Si zero-valent means so-called simple Si. Si divalent means SiO. Si tetravalent means $SiO_2$. Si monovalent and trivalent were excluded since their intensities are small, which in turn lowers the accuracy of peak fitting. Although Si divalent generally includes silicon carbide as well, the peak shape of the C 1s Narrow spectrum shows no peak shape disturbance (such as shoulder peak or tailing) that is associated with a chemical shift of 282.5 to 283.0 eV, which is derived from silicon carbide, and thus the amount of silicon carbide present was considered to be at or below the lower detection limit. Therefore, the Si divalent peak was considered to mean only SiO.

[1-9] Hydrophobicity

Pure water at the same temperature as room temperature was fed into a 20-mL glass sample bottle (body diameter $\times$ height: $\varphi$28 mm $\times$ 61 mm) to a depth of about 1 cm. 0.05 g of the composite particle was measured on a piece of drug packing paper, and the composite particle was slowly fed into the aforementioned sample bottle. At this time, the height from which the composite particle was fed was within 0.5 to 3.0 cm from the water's surface. After the feeding, the sample bottle was left to stand still and the osmosis behavior of the composite particle into the water was observed. The composite particle is considered hydrophobic when it does not reach the bottom of the sample bottle even after leaving it to stand for 5 minutes, as confirmed by visual observation. The composite particle that reaches the bottom of the sample bottle within 5 minutes under the same conditions was determined to be hydrophilic.

[2] Evaluation of capacity and initial coulombic efficiency

[2-1] Preparation of negative electrode sheet

Styrene butadiene rubber (SBR) and carboxymethyl cellulose (CMC) were used as binders.
Specifically, an SBR aqueous dispersion in which SBR having a solid content of 40% by mass had been dispersed and a 2% by mass CMC aqueous solution in which CMC powder had been dissolved were obtained.
A mixture of carbon black (SUPER C45 ®, manufactured by Imerys Graphite & Carbon) and single-walled carbon nanotubes (WPB-030, manufactured by OCSiAl) at a mass ratio of 5:1 was prepared as a mixed conductive auxiliary agent.
A slurry for forming a negative electrode mixture layer was obtained by mixing 96.4 parts by mass of the composite particle, 0.6 parts by mass of the mixed conductive auxiliary agent, the CMC aqueous solution corresponding to a CMC solid content of 1.5 parts by mass, and the SBR aqueous dispersion corresponding to a SBR solid content of 1.5 parts by mass, adding thereto an appropriate amount of water for viscosity adjustment, and kneading the mixture with a rotation/revolution mixer (manufactured by THINKY CORPORATION). The slurry concentration was 45 to 55% by mass.

The slurry for forming a negative electrode mixture layer was uniformly applied onto a copper foil having a thickness of 20 um as a current collector foil using a doctor blade so as to have a gap of 75 $\mu$m, dried on a hot plate, and then vacuum-dried at 70°C for 12 hours to form a negative electrode mixture layer on the current collector foil. This is referred to as a negative electrode sheet (sheet including the negative electrode mixture layer and the current collector foil). The weight per area was about 3 mg/cm$^2$.

The negative electrode sheet was punched out to a 16 mm$\varphi$ shape, and pressed by a uniaxial pressing machine to adjust the density of the negative electrode mixture layer to 1.2 g/cm$^3$, thereby obtaining a negative electrode.

The electrode density of the negative electrode (negative electrode density) was calculated as follows. The mass and the thickness of the negative electrode mixture layer were determined by measuring the mass and the thickness of the negative electrode obtained by the above-described method, and subtracting therefrom the mass and the thickness of the current collector foil punched out into 16 mm$\varphi$, which had been separately measured, and the electrode density (negative electrode density) was calculated from those obtained values.

[2-2] Preparation of coin battery (lithium counter electrode cell)

In an insulating gasket made of polypropylene (inner diameter: about 18 mm), separators (polypropylene microporous film) impregnated with an electrolytic solution were sandwiched by the negative electrode described above and metal lithium foil (thickness: 1.7 mm) punched out to 17.5 mm$\varphi$, and laminated. At this time, the negative electrode mixture layer surface of the negative electrode was arranged so as to face the metal lithium foil with the separator sandwiched therebetween. This was placed in a 2320 coin-shaped cell and sealed with a caulking machine to obtain a test cell (lithium counter electrode cell).

The electrolytic solution in the lithium counter electrode cell used was a solution obtained by dissolving 1 part by mass of vinylene carbonate (VC) in 100 parts by mass of a solvent in which ethylene carbonate, ethyl methyl carbonate, and diethyl carbonate had been mixed at a volume ratio of 3:5:2, and further dissolving the electrolyte lithium hexafluorophosphate (LiPF$_6$) therein to a concentration of 1.2 mol/L.

[2-3] Initial charge specific capacity, initial discharge specific capacity

The test was carried out using the lithium counter electrode cell. A constant current (CC) charging was carried out from open circuit voltage (OCV) to 0.005 V at a current value corresponding to 0.01 C. At the time point when 0.005 V was reached, the charging was switched to constant voltage (CV) charging. The cutoff condition was set to the time point when the current value was decreased to the value corresponding to 0.005 C. The specific capacity at this time is taken as the initial charge specific capacity. Next, constant current discharging was carried out at a current value corresponding to 0.01 C with an upper limit voltage of 1.5 V. The specific capacity at this time is taken as the initial discharge specific capacity.

The test was carried out in a thermostatic tank set at 25°C. At this time, the specific capacity is a value obtained by dividing the capacity by the mass of the negative electrode active material. Also, in the present test, the "current value corresponding to 1 C" is the size of current that can finish discharging the capacity of the negative electrode estimated from the mass of Si and amorphous carbon in the negative electrode active material included in the negative electrode, as well as the theoretical specific capacity (4200 mAh/g and 200 mAh/g, respectively), in 1 hour.

[2-4] Si-converted initial discharge specific capacity

When the total content rate (wt%) of oxygen, silicon, and metal elements included in the composite particle is defined as $W_o$, $W_{Si}$, and $W_a$, respectively, the Si-converted initial discharge specific capacity is determined according to the following expression (2).

$$\text{Si-converted initial discharge specific capacity}$$
$$= 100 \times \{\text{Initial discharge specific capacity} - (100 - W_o - W_{si}$$
$$- W_a) \times 2\}/W_{si} \quad (2)$$

$(100 - W_o - W_{si} - W_a)$ is the content rate of carbon included in the composite particle, and the Si-converted initial discharge capacity is determined by defining the discharge specific capacity of that carbon as 200 mAh/g, subtracting it from the initial discharge specific capacity of the composite particle, and then dividing the resulting specific capacity by the silicon content rate.

[2-5] Initial coulombic efficiency

The initial coulombic efficiency (%) was defined as (initial discharge specific capacity)/(initial charge specific capacity) $\times$ 100, which is a numerical value expressed as a percentage of the value obtained by dividing the initial discharge specific capacity by the initial charge specific capacity.

[3] 100th-cycle capacity maintenance rate and 1-C rate discharge capacity maintenance rate

[3-1] Preparation of cell

[3-1-1] Negative electrode preparation

The sheet including the negative electrode mixture layer and the current collector foil obtained in [2-1] was adjusted using a roll press so that the negative electrode mixture layer density was 1.2 to 1.3 g/cm$^3$, and punched out into a negative electrode so that the area of the mixture layer-coated section was 21.84 cm$^2$ (4.2 cm $\times$ 5.2 cm) and the area of the mixture layer-uncoated section (= tab section) was 1.5 cm$^2$ (1.0 cm $\times$ 1.5 cm).

[3-1-2] Positive electrode preparation

95 g of LiNi$_{3/5}$Mn$_{1/5}$Co$_{1/5}$O$_2$ (D$_{V50}$: 11 $\mu$m), 3 g of carbon black (SUPER C-65, manufactured by Imerys Graphite & Carbon) as a conductive auxiliary agent, and 2 g of polyvinylidene fluoride (PVdF) as a binder were stirred and mixed while adding N-methyl-pyrrolidone as appropriate, thereby preparing a slurry dispersion.
The dispersion was applied to an aluminum foil with a thickness of 20 um using a roll coater so that the thickness was uniform, dried, then roll-pressed, and punched out into a positive electrode so that the area of the mixture layer-coated section was 20.00 cm$^2$ (4.0 cm $\times$ 5.0 cm) and the area of the mixture layer-uncoated section (= tab section) was 1.5 cm$^2$ (1.0 cm $\times$ 1.5 cm).

[3-1-3] Preparation of two-electrode cell

For the above negative electrode and positive electrode, an Al tab and a Ni tab were attached to the Al foil and the Cu foil, respectively. They were laminated facing each other with a polypropylene film microporous membrane interposed therebetween, packed with aluminum lamination, filled with the electrolytic solution described in [2-2], and then the opened section was sealed by heat fusion to prepare a battery.

[3-2] Measurement of reference capacity

In a thermostatic tank at 25°C, the cell was charged at 0.1 C in CC and CV modes with an upper limit voltage of 4.2 V and a cutoff current value of 2.5 mA, and discharged at 0.1 C in CC mode with a lower limit voltage of 2.7 V. The above operation was repeated four times, and the discharge capacity in the fourth time was defined as a reference capacity (a) of the two-electrode cell.

[3-3] 100th-cycle capacity maintenance rate

The test was carried out using the two-electrode cell whose reference capacity was determined in [3-2]. Charging was performed from OCV at 0.2 C in CC mode with an upper limit voltage of 4.2 V, followed by charging in CV mode with a cutoff of 0.05 C.
Discharging was performed at 0.2 C in CC mode with a lower limit voltage of 2.8 V.
This charging and discharging operation was defined as one cycle, and repeated for 100 cycles in a thermostatic tank at 25°C, and the 500th-discharge capacity was defined as a cycle discharge capacity (b). The value expressed as a percentage of the cycle discharge capacity (b) measured under the above conditions/the reference capacity (a) of the two-electrode cell, that is, 100 $\times$ (b)/(a), was defined as the cycle capacity maintenance rate.

[3-4] 1-C rate discharge capacity maintenance rate

The test was carried out, using the two-electrode cell whose reference capacity was determined in [3-2]. Charging was carried out from OCV at 0.2 C in CC mode with an upper limit voltage of 4.2 V, followed by charging in CV mode with a cutoff of 0.05 C.

Discharging was carried out at 1.0 C in CC mode with a lower limit voltage of 2.8 V, and the discharge capacity at that time was defined as a 1-C rate discharge capacity (c).

The value expressed as a percentage of the 1-C rate discharge capacity (c) measured under the above conditions/the reference capacity (a) of the two-electrode cell, that is, $100 \times (c)/(a)$, was defined as the 1-C rate discharge capacity maintenance rate.

[Examples 1 to 24 and Comparative Examples 1 to 6]

Composite particles were produced by a production method including the steps (1), (2), and (3) described in "[3] Method for producing composite particle" above.

The BET specific surface area and particle size distribution ($D_{v10}$, $D_{v50}$, $D_{v90}$) of carbonized spherical phenolic resins or graphite, which are the raw material carbon, and the coating conditions of metal oxide precursors are shown in Table 1; the activation conditions and the physical properties after the activation are shown in Tables 2-1 to 3 (hereinafter, these are collectively referred to as "Table 2"); the silicon precipitation conditions and the physical properties of the composite particles are shown in Tables 3-1 to 3 (hereinafter, these are collectively referred to as "Table 3"); and the battery evaluation results are shown in Table 4.

The solution including the metal oxide precursor was added into a rolling-fluidizing coating machine (MP-01_mini, manufactured by Powrex Corporation) to be dry-mixed until the solution was completely sprayed.

(Operating conditions of rolling-fluidizing coating machine)

   · Rotor: standard
   · Filter: FPM
   · Mesh: 800M
   · Nozzle type: NPX-II
   · Nozzle diameter: 1.2 mm
   · Nozzle position: tangent
   · Number of nozzles: 1
   · Rotor rotation speed: 400 rpm
   · Spray air pressure: 0.17 (MPa)
   · Blow-off pressure: 0.2 (MPa)
   · Filter withdrawal time/interval: 4.0/0.3 (s/s)
   · Air supply quantity: 0.2 m$^3$/min
   · Air supply temperature: described in Table 1
   · Atmosphere: $N_2$
   · Spraying speed: 2.0 g/min

Activation conditions

Heating:

   · Atmosphere: $N_2$
   · Speed: 150°C/h

Activation:

   · Atmosphere: $CO_2$

· Temperature: described in Table 2
· Retention time: described in Table 2

Cooling:

· Atmosphere: $N_2$
· Speed: 150°C/h

Silicon precipitation conditions

Pre-drying:

· Atmosphere: vacuum
· Temperature: 110°C
· Retention time: 3 h

Heating:

· Atmosphere: Ar
· Speed: 150°C/h

Silicon precipitation conditions

· Atmosphere: $SiH_4$ (concentration 100%)
· Temperature: 400°C
- Pressure: 760 torr
· Treatment time: described in Table 3

Cooling:

· Atmosphere: Ar
· Speed: 150°C/h

Surface oxidation

· Atmosphere: $Ar/O_2$ (95/5 vol%)
· Temperature: 30°C
· Time: 1 h

[Table 1]

| | Raw material carbon | Physical properties of raw material carbon | | | |
| --- | --- | --- | --- | --- | --- |
| | | Specific surface area | Particle size distribution | | |
| | | BET | $D_{V10}$ | $D_{V50}$ | $D_{V90}$ |
| | | [m²/g] | [μm] | [μm] | [μm] |
| Example 1 | Spherical amorphous carbon A | 1.6 | 3.3 | 4.7 | 6.5 |
| Example 2 | Spherical amorphous carbon B | 0.7 | 7.3 | 18.1 | 24.1 |
| Example 3 | Spherical amorphous carbon C | 3.2 | 0.7 | 1.4 | 6.6 |
| Example 4 | Spherical amorphous carbon G | 0.4 | 10.2 | 22.1 | 29.6 |
| Example 5 | Spherical amorphous carbon H | 8.7 | 0.3 | 0.6 | 3.2 |
| Example 6 | Spherical amorphous carbon I | 0.5 | 9.6 | 18.1 | 32.7 |
| Example 7 | Spherical amorphous carbon A | 1.6 | 3.3 | 4.7 | 6.5 |
| Example 8 | Spherical amorphous carbon A | 1.6 | 3.3 | 4.7 | 6.5 |
| Example 9 | Spherical amorphous carbon D | 2.1 | 2.6 | 4.5 | 6.4 |
| Example 10 | Spherical amorphous carbon E | 1.0 | 2.9 | 4.8 | 7.3 |
| Example 11 | Spherical amorphous carbon A | 1.6 | 3.3 | 4.7 | 6.5 |
| Example 12 | Spherical amorphous carbon A | 1.6 | 3.3 | 4.7 | 6.5 |
| Example 13 | Spherical amorphous carbon A | 1.6 | 3.3 | 4.7 | 6.5 |
| Example 14 | Spherical amorphous carbon A | 1.6 | 3.3 | 4.7 | 6.5 |
| Example 15 | Spherical amorphous carbon A | 1.6 | 3.3 | 4.7 | 6.5 |
| Example 16 | Spherical amorphous carbon A | 1.6 | 3.3 | 4.7 | 6.5 |
| Example 17 | Spherical amorphous carbon A | 1.6 | 3.3 | 4.7 | 6.5 |
| Example 18 | Spherical amorphous carbon A | 1.6 | 3.3 | 4.7 | 6.5 |
| Example 19 | Spherical amorphous carbon A | 1.6 | 3.3 | 4.7 | 6.5 |
| Example 20 | Spherical amorphous carbon A | 1.6 | 3.3 | 4.7 | 6.5 |
| Example 21 | Spherical amorphous carbon A | 1.6 | 3.3 | 4.7 | 6.5 |
| Example 22 | Spherical amorphous carbon A | 1.6 | 3.3 | 4.7 | 6.5 |
| Example 23 | Spherical amorphous carbon A | 1.6 | 3.3 | 4.7 | 6.5 |
| Example 24 | Spherical amorphous carbon A | 1.6 | 3.3 | 4.7 | 6.5 |
| Comparative Example 1 | Spherical amorphous carbon A | 1.6 | 3.3 | 4.7 | 6.5 |
| Comparative Example 2 | Spherical amorphous carbon A | 1.6 | 3.3 | 4.7 | 6.5 |
| Comparative Example 3 | Spherical amorphous carbon A | 1.6 | 3.3 | 4.7 | 6.5 |
| Comparative Example 4 | Spherical amorphous carbon F | 1311 | 0.6 | 2.1 | 9.7 |
| Comparative Example 5 | Spherical graphite | 1.0 | 9.6 | 16.1 | 25.8 |
| Comparative Example 6 | Silicon carbon composite particle | 1.8 | 3.3 | 4.7 | 6.5 |

[Table 1] (continued)

| | Precursor solution | | | | | |
| --- | --- | --- | --- | --- | --- | --- |
| | Metal oxide precursor 1 | | Metal oxide precursor 2 | | Solvent | |
| | Type | Proportion [% by mass] | Type | Proportion [% by mass] | Type | Proportion [% by mass] |
| Example 1 | Titanium(IV) tetraisopropoxide | 15.0 | - | - | Dehydrated ethanol | 85.0 |
| Example 2 | Titanium(IV) tetraisopropoxide | 15.0 | - | - | Dehydrated ethanol | 85.0 |
| Example 3 | Titanium(IV) tetraisopropoxide | 15.0 | - | - | Dehydrated ethanol | 85.0 |
| Example 4 | Titanium(IV) tetraisopropoxide | 15.0 | - | - | Dehydrated ethanol | 85.0 |
| Example 5 | Titanium(IV) tetraisopropoxide | 15.0 | - | - | Dehydrated ethanol | 85.0 |
| Example 6 | Titanium(IV) tetraisopropoxide | 15.0 | - | - | Dehydrated ethanol | 85.0 |
| Example 7 | Cerium(III) triisopropoxide | 15.0 | - | - | Dehydrated toluene | 85.0 |
| Example 8 | Aluminum(III) triisopropoxide | 15.0 | - | - | Dehydrated toluene | 85.0 |
| Example 9 | Titanium(IV) tetraisopropoxide | 15.0 | - | - | Dehydrated ethanol | 85.0 |
| Example 10 | Titanium(IV) tetraisopropoxide | 15.0 | - | - | Dehydrated ethanol | 85.0 |
| Example 11 | Titanium(IV) tetraisopropoxide | 15.0 | - | - | Dehydrated ethanol | 85.0 |
| Example 12 | Vanadium(V) oxytriisopropoxide | 15.0 | - | - | Dehydrated hexane | 85.0 |
| Example 13 | Yttrium(III) triisopropoxide | 5.0 | - | - | Dehydrated toluene | 95.0 |

(continued)

| | Precursor solution | | | | | |
|---|---|---|---|---|---|---|
| | Metal oxide precursor 1 | | Metal oxide precursor 2 | | Solvent | |
| | Type | Proportion [% by mass] | Type | Proportion [% by mass] | Type | Proportion [% by mass] |
| Example 14 | Titanium(IV) tetraisopropoxide | 1.7 | Yttrium(III) triisopropoxide | 3.3 | Dehydrated ethanol | 95.0 |
| Example 15 | Titanium(IV) tetraisopropoxide | 13.1 | Ethoxylithium | 1.9 | Dehydrated ethanol | 85.0 |
| Example 16 | Titanium(IV) tetraisopropoxide | 15.0 | - | - | Dehydrated ethanol | 85.0 |
| Example 17 | Cerium(III) triisopropoxide | 15.0 | - | - | Dehydrated toluene | 85.0 |
| Example 18 | Titanium(IV) tetraisopropoxide | 15.0 | - | - | Dehydrated ethanol | 85.0 |
| Example 19 | Titanium(IV) tetraisopropoxide | 1.0 | Ethoxylithium | 14.0 | Dehydrated ethanol | 85.0 |
| Example 20 | Pentaethoxyniobium(V) | 15.0 | - | - | Dehydrated ethanol | 85.0 |
| Example 21 | Pentaethoxytungsten(V) | 15.0 | - | - | Dehydrated ethanol | 85.0 |
| Example 22 | Pentaethoxymolybdenum (V) | 15.0 | - | - | Dehydrated ethanol | 85.0 |
| Example 23 | Pentaethoxyniobium(V) | 15.0 | - | - | Dehydrated ethanol | 85.0 |
| Example 24 | Titanium(IV) tetraisopropoxide | 15.0 | - | - | Dehydrated ethanol | 85.0 |
| Comparative Example 1 | - | - | - | - | - | - |
| Comparative Example 2 | Yttrium(III) triisopropoxide | 5.0 | - | - | Dehydrated toluene | 95.0 |

(continued)

| | Precursor solution | | | | | |
| --- | --- | --- | --- | --- | --- | --- |
| | Metal oxide precursor 1 | | Metal oxide precursor 2 | | Solvent | |
| | Type | Proportion [% by mass] | Type | Proportion [% by mass] | Type | Proportion [% by mass] |
| Comparative Example 3 | Aluminum(III) triisopropoxide | 15.0 | - | - | Dehydrated toluene | 85.0 |
| Comparative Example 4 | Titanium(IV) tetraisopropoxide | 15.0 | - | - | Dehydrated ethanol | 85.0 |
| Comparative Example 5 | Titanium(IV) tetraisopropoxide | 15.0 | - | - | Dehydrated ethanol | 85.0 |
| Comparative Example 6 | Titanium(IV) tetraisopropoxide | 15.0 | - | - | Dehydrated ethanol | 85.0 |

[Table 1] (continued)

| | Carbonous material /precursor solution [weight ratio] | Rolling fluidized bed operation conditions |
| --- | --- | --- |
| | | Air supply |
| | | Temperature [°C] |
| Example 1 | 4.2 | 80 |
| Example 2 | 4.2 | 80 |
| Example 3 | 4.2 | 80 |
| Example 4 | 4.2 | 80 |
| Example 5 | 4.2 | 80 |
| Example 6 | 4.2 | 80 |
| Example 7 | 4.7 | 120 |
| Example 8 | 4.0 | 120 |
| Example 9 | 4.2 | 80 |
| Example 10 | 4.2 | 80 |
| Example 11 | 4.2 | 80 |
| Example 12 | 0.9 | 80 |
| Example 13 | 1.8 | 120 |
| Example 14 | 1.7 | 80 |
| Example 15 | 5.0 | 80 |
| Example 16 | 28.0 | 80 |
| Example 17 | 4.7 | 120 |
| Example 18 | 56.0 | 80 |
| Example 19 | 1.7 | 80 |
| Example 20 | 5.7 | 80 |
| Example 21 | 10.0 | 80 |
| Example 22 | 6.0 | 80 |
| Example 23 | 2.3 | 80 |
| Example 24 | 4.2 | 80 |
| Comparative Example 1 | - | - |
| Comparative Example 2 | 1.8 | 120 |
| Comparative Example 3 | 4.0 | 120 |
| Comparative Example 4 | 4.2 | 80 |
| Comparative Example 5 | 4.2 | 80 |
| Comparative Example 6 | 4.2 | 80 |

**EP 4 411 893 A1**

[Table 2-1]

| | Temperature | Time | Yield | BET specific surface area | Fine pore volume | | |
|---|---|---|---|---|---|---|---|
| | | | | | Cumulative fine pore volume $V_{200}$ | Cumulative fine pore volume $V_{3-200}$ for fine pore diameter of 3 nm or more and 200 nm or less | | |
| | | | | | | Numerical value | $V_{3-200}/V_{200}$ |
| | [°C] | [h] | [%] | [$m^2/g$] | $cm^3/g$ | $cm^3/g$ | % |
| Example 1 | 950 | 6.5 | 42.4 | 2066 | 1.05 | 0.084 | 8 |
| Example 2 | 950 | 6.5 | 44.1 | 2034 | 1.04 | 0.082 | 8 |
| Example 3 | 950 | 6.5 | 41.2 | 2099 | 1.06 | 0.086 | 8 |
| Example 4 | 950 | 6.5 | 46.1 | 1989 | 1.01 | 0.079 | 8 |
| Example 5 | 950 | 6.5 | 40.7 | 2102 | 1.07 | 0.089 | 8 |
| Example 6 | 950 | 6.5 | 43.8 | 2015 | 1.02 | 0.080 | 8 |
| Example 7 | 950 | 3.0 | 16.7 | 1509 | 0.81 | 0.258 | 32 |
| Example 8 | 1000 | 4.5 | 44.9 | 2029 | 1.03 | 0.021 | 2 |
| Example 9 | 950 | 6.5 | 42.1 | 2109 | 1.10 | 0.084 | 8 |
| Example 10 | 950 | 6.5 | 41.3 | 1987 | 0.97 | 0.081 | 8 |
| Example 11 | 880 | 10.5 | 30.1 | 2307 | 1.32 | 0.088 | 7 |
| Example 12 | 950 | 6.5 | 29.9 | 2221 | 1.41 | 0.298 | 21 |
| Example 13 | 950 | 6.5 | 30.2 | 1899 | 1.17 | 0.256 | 22 |
| Example 14 | 950 | 6.5 | 34.2 | 2011 | 1.09 | 0.176 | 16 |
| Example 15 | 950 | 5.5 | 23.1 | 2233 | 1.23 | 0.304 | 25 |
| Example 16 | 950 | 6.5 | 44.8 | 2037 | 1.03 | 0.024 | 2 |
| Example 17 | 1050 | 1.5 | 9.5 | 1415 | 0.75 | 0.278 | 37 |
| Example 18 | 950 | 6.5 | 45.5 | 2025 | 1.02 | 0.019 | 2 |
| Example 19 | 950 | 3.0 | 11.2 | 1759 | 0.96 | 0.086 | 9 |
| Example 20 | 950 | 6.5 | 42.1 | 2018 | 1.02 | 0.085 | 8 |
| Example 21 | 950 | 5.0 | 25.1 | 1945 | 1.27 | 0.133 | 10 |
| Example 22 | 880 | 10.5 | 15.3 | 1801 | 0.98 | 0.369 | 38 |
| Example 23 | 950 | 6.5 | 41.3 | 2017 | 1.03 | 0.089 | 9 |
| Example 24 | 950 | 6.5 | 42.4 | 2066 | 1.05 | 0.084 | 8 |
| Comparative Example 1 | 950 | 6.5 | 45.7 | 2023 | 1.02 | 0.012 | 1 |
| Comparative Example 2 | 950 | 6.5 | 30.2 | 1899 | 1.17 | 0.256 | 22 |
| Comparative Example 3 | 900 | 8.5 | 43.2 | 1989 | 1.01 | 0.010 | 1 |
| Comparative Example 4 | 950 | 3.5 | 72.0 | 1801 | 0.97 | 0.257 | 26 |
| Comparative Example 5 | 950 | 6.5 | 50.2 | 24.3 | 0.12 | 0.109 | 91 |

(continued)

| | Temperature | Time | Yield | BET specific surface area | Fine pore volume | | |
|---|---|---|---|---|---|---|---|
| | | | | | Cumulative fine pore volume $V_{200}$ | Cumulative fine pore volume $V_{3\text{-}200}$ for fine pore diameter of 3 nm or more and 200 nm or less | |
| | | | | | | Numerical value | $V_{3\text{-}200}/V_{200}$ |
| | [°C] | [h] | [%] | [m²/g] | cm³/g | cm³/g | % |
| Comparative Example 6 | - | - | - | - | - | - | - |

[Table 2-1] (continued)

| | Element content rate | | | | |
|---|---|---|---|---|---|
| | O | Element 1 | | Element 2 | |
| | Content rate | Type | Content rate | Type | Content rate |
| | % by mass | - | % by mass | - | % by mass |
| Example 1 | 1.8 | Ti | 1.4 | - | - |
| Example 2 | 1.8 | Ti | 1.4 | - | - |
| Example 3 | 1.9 | Ti | 1.5 | - | - |
| Example 4 | 1.8 | Ti | 1.3 | - | - |
| Example 5 | 1.9 | Ti | 1.5 | - | - |
| Example 6 | 1.8 | Ti | 1.4 | - | - |
| Example 7 | 2.8 | Ce | 8.2 | - | - |
| Example 8 | 1.9 | Al | 1.1 | - | - |
| Example 9 | 1.9 | Ti | 1.4 | - | - |
| Example 10 | 1.7 | Ti | 1.5 | - | - |
| Example 11 | 2.2 | Ti | 2.0 | - | - |
| Example 12 | 9.3 | V | 10.7 | - | - |
| Example 13 | 1.7 | Y | 3.1 | - | - |
| Example 14 | 1.7 | Ti | 0.5 | Y | 1.8 |
| Example 15 | 2.4 | Ti | 1.9 | Li | 0.2 |
| Example 16 | 1.0 | Ti | 0.2 | - | - |
| Example 17 | 4.2 | Ce | 14.4 | - | - |
| Example 18 | 1.0 | Ti | 0.1 | - | - |
| Example 19 | 1.3 | Ti | 0.5 | Li | 10.1 |
| Example 20 | 1.7 | Nb | 1.8 | - | - |
| Example 21 | 1.6 | W | 2.7 | - | - |
| Example 22 | 3.3 | Mo | 4.8 | - | - |
| Example 23 | 2.8 | Nb | 4.5 | - | - |
| Example 24 | 1.8 | Ti | 1.4 | - | - |
| Comparative Example 1 | 0.9 | - | - | - | - |

(continued)

|  | Element content rate | | | | |
|---|---|---|---|---|---|
|  | O | Element 1 | | Element 2 | |
|  | Content rate | Type | Content rate | Type | Content rate |
|  | % by mass | - | % by mass | - | % by mass |
| Comparative Example 2 | 1.4 | - | - | - | - |
| Comparative Example 3 | 1.9 | Al | 1.1 | - | - |
| Comparative Example 4 | 2.7 | Ti | 0.8 | - | - |
| Comparative Example 5 | 0.8 | Ti | 1.2 | - | - |
| Comparative Example 6 | - | - | - | - | - |

[Table 2-2]

|  | XRD (crystalline contained material) | | | | | |
|---|---|---|---|---|---|---|
|  | Contained material 1 | | | Contained material 2 | | |
|  | Identification | 2θ | Crystallite size | Identification | 2θ | Crystallite size |
|  | - | deg | nm | - | deg | nm |
| Example 1 | $TiO_2$ (anatase) | 25.3 | 28 | $TiO_2$ (rutile) | 27.4 | 30 |
| Example 2 | $TiO_2$ (anatase) | 25.3 | 28 | $TiO_2$ (rutile) | 27.4 | 30 |
| Example 3 | $TiO_2$ (anatase) | 25.3 | 28 | $TiO_2$ (rutile) | 27.4 | 30 |
| Example 4 | $TiO_2$ (anatase) | 25.3 | 28 | $TiO_2$ (rutile) | 27.4 | 30 |
| Example 5 | $TiO_2$ (anatase) | 25.3 | 28 | $TiO_2$ (rutile) | 27.4 | 30 |
| Example 6 | $TiO_2$ (anatase) | 25.3 | 28 | $TiO_2$ (rutile) | 27.4 | 30 |
| Example 7 | $CeO_2$ | 28.3 | 18 | - | - | - |
| Example 8 | $Al_2O_3$ | 25.3 | 10 | - | - | - |
| Example 9 | $TiO_2$ (anatase) | 25.3 | 28 | $TiO_2$ (rutile) | 27.4 | 30 |
| Example 10 | $TiO_2$ (anatase) | 25.3 | 28 | $TiO_2$ (rutile) | 27.4 | 30 |
| Example 11 | $TiO_2$ (anatase) | 25.3 | 21 | $TiO_2$ (rutile) | 27.4 | 26 |
| Example 12 | $V_2O_5$ | 20.0 | 42 | - | - | - |
| Example 13 | $Y_2O_3$ | 29.1 | 15 | - | - | - |
| Example 14 | $Y_2TiO_5$ | 29.5 | 22 | $TiO_2$ (anatase) | 25.3 | 28 |
| Example 15 | $Li_4Ti_5O_{12}$ | 18.2 | 26 | - | - | - |
| Example 16 | $TiO_2$ (anatase) | 25.3 | 28 | $TiO_2$ (rutile) | 27.4 | 30 |
| Example 17 | $CeO_2$ | 28.3 | 35 | - | - | - |
| Example 18 | $TiO_2$ (anatase) | 25.3 | 28 | $TiO_2$ (rutile) | 27.4 | 30 |
| Example 19 | $Li_4Ti_5O_{12}$ | 18.2 | 26 | $Li_2CO_3$ | 30.9 | 6 |
| Example 20 | $Nb_2O_5$ | 22.6 | 66 | - | - | - |
| Example 21 | $WO_3$ | 23.1 | 11 | - | - | - |

(continued)

| | XRD (crystalline contained material) | | | | | |
| | Contained material 1 | | | Contained material 2 | | |
| | Identification | 2θ | Crystallite size | Identification | 2θ | Crystallite size |
| | - | deg | nm | - | deg | nm |
| Example 22 | $MoO_3$ | 23.9 | 301 | - | - | - |
| Example 23 | $Nb_2O_5$ | 22.6 | 66 | - | - | - |
| Example 24 | $TiO_2$ (anatase) | 25.3 | 28 | $TiO_2$ (rutile) | 27.4 | 30 |
| Comparative Example 1 | - | - | - | - | - | - |
| Comparative Example 2 | - | - | - | - | - | - |
| Comparative Example 3 | - | - | - | - | - | - |
| Comparative Example 4 | $TiO_2$ (anatase) | 25.3 | 28 | $TiO_2$ (rutile) | 27.4 | 30 |
| Comparative Example 5 | $TiO_2$ (anatase) | 25.3 | 28 | $TiO_2$ (rutile) | 27.4 | 30 |
| Comparative Example 6 | - | - | - | - | - | - |

[Table 2-2] (continued)

| | XRD (crystalline contained material) | | | | | |
| | Contained material 3 | | | Contained material 4 | | |
| | Identification | 2θ | Crystallite size | Identification | 2θ | Crystallite size |
| | - | deg | nm | - | deg | nm |
| Example 1 | - | - | - | - | - | - |
| Example 2 | - | - | - | - | - | - |
| Example 3 | - | - | - | - | - | - |
| Example 4 | - | - | - | - | - | - |
| Example 5 | - | - | - | - | - | - |
| Example 6 | - | - | - | - | - | - |
| Example 7 | - | - | - | - | - | - |
| Example 8 | - | - | - | - | - | - |
| Example 9 | - | - | - | - | - | - |
| Example 10 | - | - | - | - | - | - |
| Example 11 | - | - | - | - | - | - |
| Example 12 | - | - | - | - | - | - |
| Example 13 | - | - | - | - | - | - |
| Example 14 | $TiO_2$ (rutile) | 27.4 | 30 | $Y_2O_3$ | 29.1 | 15 |
| Example 15 | - | - | - | - | - | - |
| Example 16 | - | - | - | - | - | - |
| Example 17 | - | - | - | - | - | - |
| Example 18 | - | - | - | - | - | - |
| Example 19 | - | - | - | - | - | - |

(continued)

| | XRD (crystalline contained material) | | | | | |
| | Contained material 3 | | | Contained material 4 | | |
| | Identification | 2θ | Crystallite size | Identification | 2θ | Crystallite size |
| | - | deg | nm | - | deg | nm |
| Example 20 | - | - | - | - | - | - |
| Example 21 | - | - | - | - | - | - |
| Example 22 | - | - | - | - | - | - |
| Example 23 | - | - | - | - | - | - |
| Example 24 | - | - | - | - | - | - |
| Comparative Example 1 | - | - | - | - | - | - |
| Comparative Example 2 | - | - | - | - | - | - |
| Comparative Example 3 | - | - | - | - | - | - |
| Comparative Example 4 | - | - | - | - | - | - |
| Comparative Example 5 | - | - | - | - | - | - |
| Comparative Example 6 | - | - | - | - | - | |

[Table 2-3]

| | Image analysis | | | | |
| | Distance from core material surface to metal oxide end | Diameter of oxide (circle equivalent diameter from area) | Diameter of pores (circle equivalent diameter from area) | Proportion of area of pores on surface | Depth of pores from surface |
| | Number average value (L1) | Value $D_{S50}$ at area frequency of 50% | Value $D_{A, S}$ at area frequency of 50% | Average value over 50 fields of view | Average value (L2) |
| | nm | nm | nm | % | nm |
| Example 1 | 220 | 33 | 42 | 42 | 230 |
| Example 2 | 221 | 35 | 45 | 49 | 233 |
| Example 3 | 213 | 34 | 42 | 29 | 221 |
| Example 4 | 221 | 35 | 45 | 49 | 233 |
| Example 5 | 213 | 34 | 42 | 29 | 221 |
| Example 6 | 221 | 35 | 44 | 47 | 233 |
| Example 7 | 899 | 21 | 23 | 55 | 896 |
| Example 8 | 17 | 12 | 14 | 41 | 21 |
| Example 9 | 252 | 33 | 42 | 46 | 249 |
| Example 10 | 207 | 33 | 41 | 39 | 219 |
| Example 11 | 351 | 27 | 34 | 46 | 377 |
| Example 12 | 764 | 49 | 51 | 61 | 766 |
| Example 13 | 649 | 49 | 52 | 60 | 651 |
| Example 14 | 448 | 42 | 46 | 47 | 451 |

(continued)

| | | Image analysis | | | | |
|---|---|---|---|---|---|---|
| | | Distance from core material surface to metal oxide end | Diameter of oxide (circle equivalent diameter from area) | Diameter of pores (circle equivalent diameter from area) | Proportion of area of pores on surface | Depth of pores from surface |
| | | Number average value (L1) | Value $D_{S50}$ at area frequency of 50% | Value $D_{A, S}$ at area frequency of 50% | Average value over 50 fields of view | Average value (L2) |
| | | nm | nm | nm | % | nm |
| | Example 15 | 865 | 31 | 34 | 65 | 876 |
| | Example 16 | 210 | 33 | 39 | 9 | 212 |
| | Example 17 | 975 | 45 | 51 | 78 | 1052 |
| | Example 18 | 192 | 30 | 31 | 5 | 194 |
| | Example 19 | 956 | 8 | 9 | 69 | 967 |
| | Example 20 | 200 | 108 | 121 | 32 | 202 |
| | Example 21 | 776 | 13 | 14 | 34 | 787 |
| | Example 22 | 922 | 687 | 701 | 62 | 913 |
| | Example 23 | 219 | 121 | 144 | 42 | 212 |
| | Example 24 | 220 | 33 | 42 | 42 | 230 |
| | Comparative Example 1 | - | - | - | - | - |
| | Comparative Example 2 | - | - | 52 | 60 | 651 |
| | Comparative Example 3 | - | - | - | - | - |
| | Comparative Example 4 | 108 | 33 | 32 | 68 | 1050(particle radius) |
| | Comparative Example 5 | - | - | - | - | - |
| | Comparative Example 6 | - | - | - | - | - |

[Table 3-1]

| | | Treatment time | Yield | BET specific surface area | Fine pore volume | | | Particle size distribution | | |
|---|---|---|---|---|---|---|---|---|---|---|
| | | | | | Cumulative fine pore volume $V_{200}$ | Cumulative fine pore volume $V_{3-200}$ for fine pore diameter of 3 nm or more and 200 nm or less | | Particle size distribution | | |
| | | | | | | Numerical value | $V_{3-200}$ /$V_{200}$ | $D_{V10}$ | $D_{V50}$ | $D_{V90}$ |
| | | min | % | [m²/g] | cm3/g | cm3/g | % | [μm] | [μm] | [μm] |
| | Example 1 | 206 | 222 | 5.1 | 0.027 | 0.024 | 86 | 3.3 | 4.7 | 6.5 |

(continued)

| | Treatment time | Yield | BET specific surface area | Fine pore volume | | | Particle size distribution | | |
|---|---|---|---|---|---|---|---|---|---|
| | | | | Cumulative fine pore volume $V_{200}$ | Cumulative fine pore volume $V_{3\text{-}200}$ for fine pore diameter of 3 nm or more and 200 nm or less | | | | |
| | | | | | Numerical value | $V_{3\text{-}200}$ /$V_{200}$ | $D_{V10}$ | $D_{V50}$ | $D_{V90}$ |
| | min | % | [m²/g] | cm3/g | cm3/g | % | [μm] | [μm] | [μm] |
| Example 2 | 203 | 220 | 4.3 | 0.027 | 0.023 | 85 | 7.3 | 18.1 | 24.1 |
| Example 3 | 209 | 224 | 6.5 | 0.028 | 0.024 | 86 | 0.7 | 1.4 | 6.6 |
| Example 4 | 192 | 214 | 4.0 | 0.026 | 0.022 | 85 | 10.2 | 22.1 | 29.6 |
| Example 5 | 213 | 226 | 11.0 | 0.029 | 0.025 | 86 | 0.3 | 0.6 | 3.2 |
| Example 6 | 206 | 222 | 4.1 | 0.026 | 0.022 | 85 | 9.6 | 18.1 | 32.7 |
| Example 7 | 105 | 162 | 17.2 | 0.121 | 0.116 | 96 | 3.3 | 4.7 | 6.5 |
| Example 8 | 199 | 218 | 2.2 | 0.006 | 0.004 | 75 | 3.3 | 4.7 | 6.5 |
| Example 9 | 206 | 222 | 5.5 | 0.027 | 0.024 | 86 | 2.6 | 4.5 | 6.4 |
| Example 10 | 209 | 224 | 4.5 | 0.027 | 0.023 | 85 | 2.9 | 4.8 | 7.3 |
| Example 11 | 253 | 250 | 6.0 | 0.033 | 0.030 | 90 | 3.3 | 4.7 | 6.5 |
| Example 12 | 209 | 224 | 17.1 | 0.126 | 0.119 | 94 | 3.3 | 4.7 | 6.5 |
| Example 13 | 199 | 218 | 13.6 | 0.098 | 0.092 | 94 | 3.3 | 4.7 | 6.5 |
| Example 14 | 203 | 220 | 8.8 | 0.059 | 0.055 | 92 | 3.3 | 4.7 | 6.5 |
| Example 15 | 189 | 212 | 17.5 | 0.134 | 0.128 | 95 | 3.3 | 4.7 | 6.5 |
| Example 16 | 203 | 220 | 2.4 | 0.008 | 0.007 | 82 | 3.3 | 4.7 | 6.5 |
| Example 17 | 84 | 150 | 21.0 | 0.178 | 0.172 | 97 | 3.3 | 4.7 | 6.5 |
| Example 18 | 203 | 220 | 2.1 | 0.006 | 0.005 | 74 | 3.3 | 4.7 | 6.5 |
| Example 19 | 108 | 164 | 5.3 | 0.029 | 0.023 | 80 | 3.3 | 4.7 | 6.5 |
| Example 20 | 203 | 220 | 3.4 | 0.026 | 0.024 | 91 | 3.3 | 4.7 | 6.5 |
| Example 21 | 169 | 200 | 7.8 | 0.040 | 0.037 | 93 | 3.3 | 4.7 | 6.5 |
| Example 22 | 155 | 192 | 7.0 | 0.285 | 0.280 | 98 | 3.3 | 4.7 | 6.5 |
| Example 23 | 203 | 220 | 3.3 | 0.027 | 0.025 | 92 | 3.3 | 4.7 | 6.5 |
| Example 24 | 206 | 222 | 5.1 | 0.027 | 0.024 | 86 | 3.3 | 4.7 | 6.5 |
| Comparative Example 1 | 203 | 220 | 1.8 | 0.004 | 0.002 | 67 | 3.3 | 4.7 | 6.5 |
| Comparative Example 2 | 199 | 218 | 13.9 | 0.098 | 0.092 | 94 | 3.3 | 4.7 | 6.5 |
| Comparative Example 3 | 199 | 218 | 1.7 | 0.003 | 0.002 | 61 | 3.3 | 4.7 | 6.5 |
| Comparative Example 4 | 138 | 182 | 34.2 | 0.231 | 0.226 | 98 | 0.6 | 2.1 | 9.7 |

(continued)

| | Treatment time | Yield | BET specific surface area | Fine pore volume | | | Particle size distribution | | |
|---|---|---|---|---|---|---|---|---|---|
| | | | | Cumulative fine pore volume $V_{200}$ | Cumulative fine pore volume $V_{3-200}$ for fine pore diameter of 3 nm or more and 200 nm or less | | | | |
| | | | | | Numerical value | $V_{3-200}/V_{200}$ | $D_{V10}$ | $D_{V50}$ | $D_{V90}$ |
| | min | % | [m²/g] | cm3/g | cm3/g | % | [μm] | [μm] | [μm] |
| Comparative Example 5 | 7 | 104 | 15.6 | 0.104 | 0.104 | 100 | 9.6 | 16.1 | 25.8 |
| Comparative Example 6 | - | - | 2.1 | 0.003 | 0.001 | 33 | 3.3 | 4.7 | 6.5 |

[Table 3-1] (continued)

| | Raman | | Element content rate | | | | | |
|---|---|---|---|---|---|---|---|---|
| | $I_{si}/I_G$ | $I_D/I_G$ | O | Si | Element 1 | | Element 2 | |
| | - | - | Content rate | Content rate | Type | Content rate | Type | Content rate |
| | - | - | % by mass | % by mass | - | % by mass | - | % by mass |
| Example 1 | 0.43 | 1.17 | 2.5 | 59 | Ti | 0.63 | - | - |
| Example 2 | 0.44 | 1.16 | 2.3 | 58 | Ti | 0.64 | - | - |
| Example 3 | 0.42 | 1.18 | 3.0 | 60 | Ti | 0.67 | - | - |
| Example 4 | 0.44 | 1.16 | 2.1 | 55 | Ti | 0.61 | - | - |
| Example 5 | 0.43 | 1.19 | 4.5 | 60 | Ti | 0.66 | - | - |
| Example 6 | 0.43 | 1.16 | 2.2 | 59 | Ti | 0.63 | - | - |
| Example 7 | 0.34 | 1.21 | 7.5 | 28 | Ce | 5.06 | - | - |
| Example 8 | 0.29 | 1.15 | 1.6 | 58 | Al | 0.50 | - | - |
| Example 9 | 0.42 | 1.28 | 2.7 | 59 | Ti | 0.63 | - | - |
| Example 10 | 0.42 | 1.01 | 2.3 | 60 | Ti | 0.67 | - | - |
| Example 11 | 0.39 | 1.16 | 2.9 | 72 | Ti | 0.80 | - | - |
| Example 12 | 0.45 | 1.21 | 9.8 | 54 | V | 4.78 | - | - |
| Example 13 | 0.45 | 1.20 | 5.3 | 55 | Y | 1.42 | - | - |
| Example 14 | 0.44 | 1.18 | 3.7 | 57 | Ti | 0.23 | Y | 0.82 |
| Example 15 | 0.40 | 1.21 | 7.0 | 52 | Ti | 0.90 | Li | 0.10 |
| Example 16 | 0.41 | 1.15 | 1.3 | 59 | Ti | 0.09 | - | - |
| Example 17 | 0.46 | 1.22 | 9.8 | 21 | Ce | 9.60 | - | - |
| Example 18 | 0.34 | 1.15 | 1.2 | 59 | Ti | 0.05 | - | - |
| Example 19 | 0.25 | 1.17 | 2.6 | 29 | Ti | 0.30 | Li | 6.16 |
| Example 20 | 0.60 | 1.16 | 1.9 | 58 | Nb | 0.82 | - | - |
| Example 21 | 0.28 | 1.17 | 3.4 | 48 | W | 1.33 | - | - |

(continued)

| | Raman | | Element content rate | | | | | |
| | $I_{Si}/I_G$ | $I_D/I_G$ | O | Si | Element 1 | | Element 2 | |
| | | | | | Type | Content rate | Type | Content rate |
| | - | - | Content rate | Content rate | | Content rate | | Content rate |
| | - | - | % by mass | % by mass | - | % by mass | - | % by mass |
| Example 22 | 0.63 | 1.19 | 4.0 | 43 | Mo | 2.50 | - | - |
| Example 23 | 0.62 | 1.16 | 2.4 | 57 | Nb | 2.05 | - | - |
| Example 24 | 0.12 | 1.17 | 1.0 | 60 | Ti | 0.63 | - | - |
| Comparative Example 1 | 0.24 | 1.15 | 1.0 | 60 | - | - | - | - |
| Comparative Example 2 | 0.45 | 1.20 | 5.3 | 59 | - | - | - | - |
| Comparative Example 3 | 0.13 | 1.08 | 1.4 | 58 | Al | 0.50 | - | - |
| Comparative Example 4 | 0.38 | 1.05 | 12.9 | 36 | Ti | 0.46 | - | - |
| Comparative Example 5 | 0.04 | 0.62 | 0.9 | 2 | Ti | 1.14 | - | - |
| Comparative Example 6 | 0.24 | 1.15 | 1.1 | 59 | Ti | 0.61 | - | - |

[Table 3-2]

| | XRD | | | | | | |
| | Si (111) | Contained material 1 | | | Contained material 2 | | |
| | Full width at half maximum | Identification | $2\theta$ | Crystallite size | Identification | $2\theta$ | Crystallite size |
| | deg | - | deg | nm | - | deg | nm |
| Example 1 | 4.9 | $TiO_2$ (anatase) | 25.3 | 28 | $TiO_2$ (rutile) | 27.4 | 30 |
| Example 2 | 4.9 | $TiO_2$ (anatase) | 25.3 | 28 | $TiO_2$ (rutile) | 27.4 | 30 |
| Example 3 | 4.9 | $TiO_2$ (anatase) | 25.3 | 28 | $TiO_2$ (rutile) | 27.4 | 30 |
| Example 4 | 4.9 | $TiO_2$ (anatase) | 25.3 | 28 | $TiO_2$ (rutile) | 27.4 | 30 |
| Example 5 | 4.9 | $TiO_2$ (anatase) | 25.3 | 28 | $TiO_2$ (rutile) | 27.4 | 30 |
| Example 6 | 4.9 | $TiO_2$ (anatase) | 25.3 | 28 | $TiO_2$ (rutile) | 27.4 | 30 |
| Example 7 | 5.1 | $CeO_2$ | 28.3 | 18 | - | - | - |
| Example 8 | 4.7 | $Al_2O_3$ | 25.3 | 10 | - | - | - |
| Example 9 | 5.5 | $TiO_2$ (anatase) | 25.3 | 28 | $TiO_2$ (rutile) | 27.4 | 30 |
| Example 10 | 4.2 | $TiO_2$ (anatase) | 25.3 | 28 | $TiO_2$ (rutile) | 27.4 | 30 |
| Example 11 | 5.2 | $TiO_2$ (anatase) | 25.3 | 21 | $TiO_2$ (rutile) | 27.4 | 26 |

(continued)

| | XRD | | | | | | |
|---|---|---|---|---|---|---|---|
| | Si (111) | Contained material 1 | | | Contained material 2 | | |
| | Full width at half maximum | Identification | 2θ | Crystallite size | Identification | 2θ | Crystallite size |
| | deg | - | deg | nm | - | deg | nm |
| Example 12 | 4.9 | $V_2O_5$ | 20.0 | 42 | - | - | - |
| Example 13 | 4.9 | $Y_2O_3$ | 29.1 | 15 | - | - | - |
| Example 14 | 4.9 | $Y_2TiO_5$ | 29.5 | 22 | $TiO_2$ (anatase) | 25.3 | 28 |
| Example 15 | 4.9 | $Li_4Ti_5O_{12}$ | 18.2 | 26 | - | - | - |
| Example 16 | 4.9 | $TiO_2$ (anatase) | 25.3 | 28 | $TiO_2$ (rutile) | 27.4 | 30 |
| Example 17 | 4.3 | $CeO_2$ | 28.3 | 35 | - | - | - |
| Example 18 | 4.9 | $TiO_2$ (anatase) | 25.3 | 28 | $TiO_2$ (rutile) | 27.4 | 30 |
| Example 19 | 5.1 | $Li_4Ti_5O_{12}$ | 18.2 | 26 | $Li_2CO_3$ | 30.9 | 6 |
| Example 20 | 4.9 | $Nb_2O_5$ | 22.6 | 66 | - | - | - |
| Example 21 | 4.9 | $WO_3$ | 23.1 | 11 | - | - | - |
| Example 22 | 5.2 | $MoO_3$ | 23.9 | 301 | - | - | - |
| Example 23 | 4.9 | $Nb_2O_5$ | 22.6 | 66 | - | - | - |
| Example 24 | 4.9 | $TiO_2$ (anatase) | 25.3 | 28 | $TiO_2$ (rutile) | 27.4 | 30 |
| Comparative Example 1 | 4.9 | - | - | - | - | - | - |
| Comparative Example 2 | 4.9 | - | - | - | - | - | - |
| Comparative Example 3 | 5.5 | - | - | Amorphous | - | - | - |
| Comparative Example 4 | 2.3 | $TiO_2$ (anatase) | 25.3 | 28 | $TiO_2$ (rutile) | 27.4 | 30 |
| Comparative Example 5 | - | $TiO_2$ (anatase) | 25.3 | 28 | $TiO_2$ (rutile) | 27.4 | 30 |
| Comparative Example 6 | 1.4 | $TiO_2$ (anatase) | 25.3 | 28 | $TiO_2$ (rutile) | 27.4 | 30 |

[Table 3-2] (continued)

| | XRD | | | | | |
|---|---|---|---|---|---|---|
| | Contained material 3 | | | Contained material 4 | | |
| | Identification | 2θ | Crystallite size | Identification | 2θ | Crystallite size |
| | - | deg | nm | - | deg | nm |
| Example 1 | - | - | - | - | - | - |
| Example 2 | - | - | - | - | - | - |
| Example 3 | - | - | - | - | - | - |
| Example 4 | - | - | - | - | - | - |
| Example 5 | - | - | - | - | - | - |
| Example 6 | - | - | - | - | - | - |
| Example 7 | - | - | - | - | - | - |
| Example 8 | - | - | - | - | - | - |
| Example 9 | - | - | - | - | - | - |
| Example 10 | - | - | - | - | - | - |
| Example 11 | - | - | - | - | - | - |
| Example 12 | - | - | - | - | - | - |
| Example 13 | - | - | - | - | - | - |
| Example 14 | $TiO_2$ (rutile) | 27.4 | 30 | $Y_2O_3$ | 29.1 | 15 |
| Example 15 | - | - | - | - | - | - |
| Example 16 | - | - | - | - | - | - |
| Example 17 | - | - | - | - | - | - |
| Example 18 | - | - | - | - | - | - |
| Example 19 | - | - | - | - | - | - |
| Example 20 | - | - | - | - | - | - |
| Example 21 | - | - | - | - | - | - |
| Example 22 | - | - | - | - | - | - |
| Example 23 | - | - | - | - | - | - |
| Example 24 | - | - | - | - | - | - |
| Comparative Example 1 | - | - | - | - | - | - |
| Comparative Example 2 | - | - | - | - | - | - |
| Comparative Example 3 | - | - | - | - | - | - |
| Comparative Example 4 | - | - | - | - | - | - |
| Comparative Example 5 | - | - | - | - | - | - |
| Comparative Example 6 | SiC | 35.5 | 56 | - | - | - |

[Table 3-3]

| | Image analysis | | |
| --- | --- | --- | --- |
| | Distance from composite particle surface to metal oxide particle end | Diameter of metal oxide particle (circle equivalent diameter from area) | Diameter of pores (circle equivalent diameter from area) |
| | Number average value (L1) | Value $D_{S50}$ at area frequency of 50% | Value $D_{A,S}$ at area frequency of 50% |
| | nm | nm | nm |
| Example 1 | 222 | 33 | 34 |
| Example 2 | 223 | 35 | 41 |
| Example 3 | 215 | 34 | 38 |
| Example 4 | 223 | 35 | 41 |
| Example 5 | 215 | 34 | 38 |
| Example 6 | 223 | 35 | 40 |
| Example 7 | 901 | 21 | 19 |
| Example 8 | 19 | 12 | 10 |
| Example 9 | 254 | 33 | 38 |
| Example 10 | 209 | 33 | 37 |
| Example 11 | 353 | 27 | 30 |
| Example 12 | 766 | 49 | 47 |
| Example 13 | 651 | 49 | 48 |
| Example 14 | 450 | 42 | 42 |
| Example 15 | 867 | 31 | 30 |
| Example 16 | 212 | 33 | 35 |
| Example 17 | 977 | 45 | 47 |
| Example 18 | 194 | 30 | 27 |
| Example 19 | 958 | 8 | 5 |
| Example 20 | 202 | 108 | 117 |
| Example 21 | 778 | 13 | 10 |
| Example 22 | 924 | 687 | 697 |
| Example 23 | 221 | 121 | 140 |
| Example 24 | 222 | 33 | 38 |
| Comparative Example 1 | - | - | - |
| Comparative Example 2 | - | - | 48 |
| Comparative Example 3 | - | - | - |
| Comparative Example 4 | 110 | 33 | 28 |
| Comparative Example 5 | - | - | - |

(continued)

| | Image analysis | | |
|---|---|---|---|
| | Distance from composite particle surface to metal oxide particle end | Diameter of metal oxide particle (circle equivalent diameter from area) | Diameter of pores (circle equivalent diameter from area) |
| | Number average value (L1) | Value $D_{S50}$ at area frequency of 50% | Value $D_{A,S}$ at area frequency of 50% |
| | nm | nm | nm |
| Comparative Example 6 | - | - | - |

[Table 3-3] (continued)

| | Image analysis | | |
|---|---|---|---|
| | Proportion of area of pores on surface | Depth of pores from surface | (L1) / (L2) |
| | Average value over 50 fields of view | Average value (L2) | |
| | % | nm | - |
| Example 1 | 14 | 234 | 0.9 |
| Example 2 | 41 | 237 | 0.9 |
| Example 3 | 24 | 225 | 1.0 |
| Example 4 | 41 | 237 | 0.9 |
| Example 5 | 24 | 225 | 1.0 |
| Example 6 | 39 | 237 | 0.9 |
| Example 7 | 38 | 900 | 1.0 |
| Example 8 | 21 | 25 | 0.8 |
| Example 9 | 38 | 253 | 1.0 |
| Example 10 | 32 | 223 | 0.9 |
| Example 11 | 36 | 381 | 0.9 |
| Example 12 | 52 | 770 | 1.0 |
| Example 13 | 51 | 655 | 1.0 |
| Example 14 | 39 | 455 | 1.0 |
| Example 15 | 51 | 880 | 1.0 |
| Example 16 | 7 | 216 | 1.0 |
| Example 17 | 66 | 1056 | 0.9 |
| Example 18 | 4 | 198 | 1.0 |
| Example 19 | 21 | 971 | 1.0 |
| Example 20 | 30 | 206 | 1.0 |
| Example 21 | 17 | 791 | 1.0 |
| Example 22 | 61 | 917 | 1.0 |
| Example 23 | 40 | 216 | 1.0 |
| Example 24 | 34 | 234 | 0.9 |

(continued)

|  | Image analysis | | |
|---|---|---|---|
|  | Proportion of area of pores on surface | Depth of pores from surface | (L1) / (L2) |
|  | Average value over 50 fields of view | Average value (L2) |  |
|  | % | nm | - |
| Comparative Example 1 | - | - | - |
| Comparative Example 2 | 51 | 655 | - |
| Comparative Example 3 | - | - | - |
| Comparative Example 4 | 52 | 1050(particle radius) | 0.1 |
| Comparative Example 5 | - | - | - |
| Comparative Example 6 | - | - | - |

[Table 4]

|  | Coin cell evaluation | | | | Two-electrode cell evaluation | |
|---|---|---|---|---|---|---|
|  | Composite particle | | | Si-converted | 1-C rate discharge capacity maintenance rate | Cycle capacity maintenance rate |
|  | Initial charge specific capacity | Initial discharge specific capacity | Initial coulombic efficiency | Initial discharge specific capacity | | |
| New | mAh/g | mAh/g | % | mAh/g | [%] | [%] |
| Example 1 | 2520 | 2339 | 92.8 | 3828 | 92.1 | 85.6 |
| Example 2 | 2509 | 2333 | 93.0 | 3869 | 90.7 | 83.2 |
| Example 3 | 2457 | 2268 | 92.3 | 3670 | 94.2 | 86.3 |
| Example 4 | 2206 | 2041 | 92.5 | 3528 | 87.4 | 74.3 |
| Example 5 | 2201 | 1992 | 90.5 | 3208 | 95.2 | 76.1 |
| Example 6 | 2424 | 2249 | 92.8 | 3664 | 88.2 | 75.4 |
| Example 7 | 1311 | 1078 | 82.2 | 3477 | 96.4 | 81.1 |
| Example 8 | 2534 | 2372 | 93.6 | 3965 | 88.3 | 88.9 |
| Example 9 | 2455 | 2276 | 92.7 | 3728 | 93.8 | 82.6 |
| Example 10 | 2502 | 2332 | 93.2 | 3749 | 89.2 | 87.5 |
| Example 11 | 2954 | 2762 | 93.5 | 3752 | 91.2 | 78.8 |
| Example 12 | 2101 | 1822 | 86.7 | 3252 | 95.4 | 79.2 |
| Example 13 | 2171 | 1917 | 88.3 | 3331 | 94.9 | 82.8 |
| Example 14 | 2282 | 2077 | 91.0 | 3493 | 93.8 | 83.9 |
| Example 15 | 2052 | 1757 | 85.6 | 3231 | 97.1 | 78.1 |
| Example 16 | 2563 | 2402 | 93.7 | 3924 | 86.3 | 86.2 |
| Example 17 | 987 | 772 | 78.2 | 3116 | 96.4 | 72.2 |
| Example 18 | 2522 | 2348 | 93.1 | 3827 | 78.1 | 72.9 |
| Example 19 | 1359 | 1170 | 86.1 | 3567 | 84.5 | 71.2 |
| Example 20 | 2464 | 2299 | 93.3 | 3802 | 90.3 | 84.2 |

(continued)

| New | Coin cell evaluation | | | | Two-electrode cell evaluation | |
|---|---|---|---|---|---|---|
| | Composite particle | | | Si-converted | 1-C rate discharge capacity maintenance rate | Cycle capacity maintenance rate |
| | Initial charge specific capacity | Initial discharge specific capacity | Initial coulombic efficiency | Initial discharge specific capacity | | |
| | mAh/g | mAh/g | % | mAh/g | [%] | [%] |
| Example 21 | 1946 | 1707 | 87.7 | 3375 | 92.2 | 83.4 |
| Example 22 | 1903 | 1665 | 87.5 | 3624 | 84.7 | 73.7 |
| Example 23 | 2425 | 2258 | 93.1 | 3797 | 89.6 | 84.9 |
| Example 24 | 2600 | 2439 | 93.8 | 3935 | 91.8 | 86.5 |
| Comparative Example 1 | 2530 | 2355 | 93.1 | 3796 | 84.3 | 67.2 |
| Comparative Example 2 | 2050 | 1781 | 86.9 | 2898 | 92.3 | 52.3 |
| Comparative Example 3 | 2443 | 2279 | 93.3 | 3799 | 65.4 | 86.1 |
| Comparative Example 4 | 1491 | 1124 | 75.4 | 2828 | 95.1 | 32.9 |
| Comparative Example 5 | 452 | 380 | 84.1 | 2255 | 99.1 | 95.2 |
| Comparative Example 6 | 1225 | 801 | 65.4 | 1125 | 54.1 | 54.7 |

The criteria for the evaluation results of the battery were determined to be that the cycle characteristics of the two-electrode cell was 70% or more and the rate characteristics thereof was 70% or more, and that the coin cell had good characteristics. In addition, since, as a precondition, the negative electrode active material has to use silicon and have a high capacity, a Si-converted initial discharge specific capacity of 3000 mAh/g or more was also used as a criterion for good characteristics.

Comparative Example 1 is a test under the same conditions as for Example 1 except that the coating of the metal oxide precursor was not carried out. In contrast, it can be confirmed that both rate characteristics and cycle characteristics were improved in Example 1.

Comparative Example 2 is an example in which the same as for Example 13 was carried out up to the activation, and then $Y_2O_3$ was removed with a 1.0 mol/L nitric acid aqueous solution, and silicon precipitation was carried out. Although pores were formed due to the action of the metal oxide particle, cycle characteristics were significantly deteriorated. This is presumed to be because the current concentrated at the innermost section of the pore and accelerated the degradation originating therefrom. Therefore, it is considered that the presence of the metal oxide particle at the end of the pore prevents the concentration of current, while at the same time improving the rate characteristics due to the effect of increasing the reaction area with lithium.

Comparative Example 4 is an example in which the raw material carbon obtained based on Example 5 of JP2014-122158A was used. In Comparative Example 4, magnesium acetate tetrahydrate (manufactured by Kishida Chemical Co., Ltd.), hydroxypropyl cellulose (HPC) powder, and water were mixed at a mass ratio of 5:5:1, dried, and the resulting mixed powder was placed in an alumina calcination boat, heated in an electric furnace to 900°C in an argon atmosphere, retained for 1 hour, and then cooled to room temperature. To the resulting powder, 100 times its volume of a 1 mol/L sulfuric acid aqueous solution was added, and after stirring at room temperature, filtration and water washing were performed to prepare the raw material carbon, which was then subjected to activation and silicon precipitation. Although pores of 10 nm or more were observed, it was confirmed that the metal oxide particle did not reach the inside of the particle and there were many pores with no metal oxide at the innermost section, and as in Comparative Example 2, significant deterioration of cycle characteristics was observed.

Examples 2 and 3 and Examples 4, 5, and 6 differ only in the particle diameter of the raw material carbon, and thus only in the particle diameter of the composite particle, from Example 1, but the cycle characteristics and rate characteristics were good. Comparing only among them, the larger the particle diameter of the raw material carbon, the greater the expansion and contraction of one composite particle in association with charging and discharging, and therefore, the cycle characteristics are deteriorated, and the rate characteristics are also deteriorated. This tendency is more remarkable when the $D_{V50}$ is greater than 20.0 um or the $D_{V90}$ is greater than 30.0 um. On the contrary, as the particle size is decreased, there is a tendency that the rate characteristics are improved and the cycle characteristics are also improved, but since side reactions are increased in association with an increase in specific surface area, the cycle characteristics are remarkably deteriorated when the $D_{V50}$ is less than 1.0 um.

In Examples 7, 8, 12 to 23 and Comparative Example 3, the raw material carbon is the same as for Example 1, but the type of metal oxide precursor, the amount of coating on the raw material carbon, and the activation conditions are different. In Comparative Example 3, the metal oxide particle was amorphous, but no pores were formed, resulting in deteriorated rate characteristics. Examples 1 to 25 were all excellent in rate characteristics and cycle characteristics, but it was found that the degree of formation of oxide-derived pores varies depending on the oxide species, and the activation conditions need to be adjusted in order to obtain the targeted structure. They all have (L1)/(L2) larger than 0.5, and the average value of the diameter of the metal oxide particle and the average value of the diameter of the pores take close values, and therefore, the pores of 10 nm or more inside the composite particle were considered to be generated by the action of the metal oxide particle, and it was also presumed that the metal oxide particle was present at the innermost section of the pores.

Deeper pores improve rate characteristics, but at the same time increase side reactions and deteriorate cycle characteristics. In particular, when the pore depth is greater than 1000 $\mu$m, the deterioration of cycle characteristics is remarkable.

As the diameter of the pores becomes larger, the voids that are not involved in the reaction with lithium are increased, and therefore, the effect of improving rate characteristics is reduced. This tendency is particularly remarkable when the diameter is greater than 200 nm. On the contrary, as the diameter of the pores becomes smaller, the effect of improving rate characteristics is increased, but the effect is reduced when the diameter is smaller than 10 nm, and conversely, the deterioration of cycle characteristics due to increased side reactions in association with an increase in specific surface area becomes remarkable.

As the proportion of the opening area of the pores becomes larger, the effect of improving rate characteristics is increased, but when it is greater than 65%, the deterioration of cycle characteristics due to increased side reactions in association with an increase in specific surface area is increased. When the proportion is 5% or less, a higher resistance due to the presence of the metal oxide particle becomes more remarkable than the effect of improving rate characteristics, and the rate characteristics are rather deteriorated.

The larger the specific surface area and the cumulative fine pore volume $V_{200}$ for a fine pore diameter of 200 nm or less, according to BJH method, the higher the effect of improving rate characteristics, but when they are greater than 20 m$^2$/g and 0.15 cm$^3$/g, respectively, the deterioration of cycle characteristics due to increased side reactions in association with an increase in specific surface area is increased. On the contrary, when they are 2 m$^2$/g and 0.004 cm$^3$/g, respectively, a higher resistance due to the presence of the metal oxide particle becomes more remarkable than the effect of improving rate characteristics, and the rate characteristics are rather deteriorated.

When the cumulative fine pore volume $V_{3-200}$ for a diameter of 3 nm or more and 200 nm or less as determined by BJH method and the ratio of the $V_{3-200}$ to the $V_{200}$ are 0.003 cm$^3$/g and 75% or more, respectively, the effect of improving rate characteristics becomes remarkable.

When the total element content rate of Al, Ti, V, Y, Zr, Nb, Mo, W, La, Hf, Ta, and Ce is greater than 8.00% by mass, the energy density and initial efficiency are reduced. When it is less than 0.08% by mass, the effect of improving rate characteristics and cycle characteristics is not exhibited. When the total element content rate of Li, Na, K, Mg, Ca, Ba, B, N, P, S, F, and Cl is greater than 5.00% by mass, relatively large pores are likely to be formed at a fine pore diameter of less than 3 nm as determined by BJH method, and the cycle characteristics tend to be deteriorated. These elements can be used to adjust all features related to pore formation, such as the formation speed of pores, diameter and depth of pores, their distribution, and pore uniformity, and may or may not be contained. They may form a compound with the elements Al, Ti, V, Y, Zr, Nb, W, La, Hf, Ta, and Ce, or may be separate oxides.

When the crystallite size according to powder XRD is 5 nm or more, pore formation is likely to occur, and when the crystallite size is less than 5 nm or in case of being amorphous, pore formation is unlikely to occur. In addition, the conductivity of lithium ions is reduced, resulting in a higher resistance, and the rate characteristics are deteriorated. When the crystallite size according to powder XRD is 200 nm or more, the average value $D_{S50}$ of the diameter of the metal oxide particle according to cross-sectional SEM tends to be greater than 200 nm.

Figures 1 to 5 show the results of Example 20.

Examples 9, 10, and Comparative Example 5 are examples in which the crystallinity of the raw material carbon differs from that of Example 1. The raw material carbon in Example 9 has higher amorphousness than the raw material carbon in Example 1, while the raw material carbon in Example 10, on the contrary, has slightly lower amorphousness.

Whether the amorphousness is high or low can be determined by the full width at half maximum in XRD. Higher amorphousness improves rate characteristics, but side reactions are likely to occur and cycle characteristics are deteriorated. Low amorphousness results in the opposite tendency. Therefore, it is preferable that the R value is 1.00 or more and 1.30 or less. In the case where graphite was used as the raw material carbon, no fine pores were formed and little silicon was precipitated. Therefore, the rate characteristics and cycle characteristics were good, but the initial charge specific capacity and initial discharge specific capacity of the composite particle were significantly inferior to those of other materials.

Although the conditions at the time of activation and the silicon precipitation conditions in Example 11 were different from those in Example 1, both rate characteristics and cycle characteristics were good. The activation can increase the cumulative fine pore volume for a diameter of less than 3 nm, as determined by BJH method, and by increasing the silicon content rate, deterioration of the cycle characteristics can be reduced. However, simply increasing the silicon precipitation time without changing the cumulative fine pore volume causes significant deterioration of cycle characteristics since silicon is precipitated on the surface of the raw material carbon and the pores formed by the action of the metal oxide particle are filled by silicon. In addition, when the silicon precipitation time is shortened and more fine pores having a diameter of less than 3 nm are left, side reactions are increased and deterioration of cycle characteristics occurs.

Example 24 is a test under the same conditions as for Example 1 except that, after the silicon precipitation, acetylene/Ar (20/80 vol%) gas was used for treatment at 400°C, 760 torr for 1.3 h. The improved initial coulombic efficiency indicates that the presence of a thin coating layer on the surface is more effective in preventing an increase in irreversible capacity than inactivating the surface by oxidizing it. The $A_{Si}$ calculated from XPS of the composite at this time was 0.45, the value of $A_C/(A_C + A_{Si} \times (B_{SiO2} + B_{SiO}))$ was 0.94, and the true density was 1.97 g/cm$^3$. In addition, the resulting composite exhibited hydrophobicity.

Comparative Example 6 is an example in which the composite made in Comparative Example 1 was used as the core material, coated as described in Table 1, and then calcined in a nitrogen atmosphere at 950°C for 6.5 hours. The cycle and rate characteristics were significantly deteriorated. This is due to formation of SiC.

REFERENCE SIGNS LIST

1 Composite particle
2a, 2b, 2c, 2d, 2e Pore
3a, 3b, 3c, 3d Metal oxide particle
TL1, TL2 Tangent line
L Distance

**Claims**

1. A composite particle comprising carbon and silicon, wherein the composite particle comprises a metal oxide particle;

   an end of the metal oxide particle is present inside the surface of the composite particle, and pores are present on the surface of the composite particle; and
   (L1)/(L2) is 0.5 or more,
   wherein the average value of the distance from an outermost surface position of the composite particle to the end of the metal oxide particle is defined as (LI), and the average value of the depth of a pore, which has a pore diameter of 10 nm or more and is among the above pores, from an outermost surface position is defined as (L2).

2. The composite particle according to claim 1, wherein the metal oxide particle exhibits crystallinity.

3. The composite particle according to claim 1, wherein the average value (L1) of the distance from an outermost surface position of the composite particle to the end of the metal oxide particle is 10 to 1000 nm.

4. The composite particle according to claim 1, wherein the average value $D_{S50}$ of the diameter of the metal oxide particle is 10 to 200 nm.

5. The composite particle according to claim 1, wherein the crystallite size of the metal oxide particle as determined by powder X-ray diffraction measurement (powder XRD) is 5 to 200 nm.

**6.** The composite particle according to claim 1, wherein the metal oxide particle comprises at least one selected from Al, Ti, V, Y, Zr, Nb, Mo, W, La, Hf, Ta, and Ce, and comprises, as an optional component, one selected from Li, Na, K, Mg, Ca, Ba, B, N, P, S, F, and Cl, and they are present in a form of a compound or in a form of separate oxides.

**7.** The composite particle according to claim 6, wherein the total content rate of the Al, Ti, V, Y, Zr, Nb, Mo, W, La, Hf, Ta, and Ce as elements is 0.006 to 8.00% by mass, and the total content rate of the Li, Na, K, Mg, Ca, Ba, B, N, P, S, F, and Cl as elements is 0.00 to 5.00% by mass.

**8.** The composite particle according to claim 1, wherein the area-averaged diameter $D_{A,S}$ of an opening of the pores formed on the surface of the composite particle is 10 to 200 nm.

**9.** The composite particle according to claim 1, wherein the average value of the proportion of the opening area of the pores formed on the surface of the composite particle to the outermost surface area is 5 to 65%.

**10.** The composite particle according to claim 1, wherein the average value (L2) of the depth of a pore, which has a pore diameter of 10 nm or more and is among the above pores, from an outermost surface position is 10 to 1000 nm.

**11.** The composite particle according to claim 1, wherein the cumulative fine pore volume $V_{200}$, calculated by BJH method, of fine pores having a fine pore diameter of 200 nm or less is 0.003 to 0.15 $cm^3/g$.

**12.** The composite particle according to claim 1, wherein the cumulative fine pore volume $V_{3-200}$, calculated by BJH method, of fine pores having a fine pore diameter of 3 nm or more and 200 nm or less is 0.003 $cm^3/g$ or more.

**13.** The composite particle according to claim 1, wherein the ratio of the cumulative fine pore volume $V_{3-200}$, calculated by BJH method, of fine pores having a fine pore diameter of 3 nm or more and 200 nm or less to the cumulative fine pore volume $V_{200}$, calculated by BJH method, of fine pores having a fine pore diameter of 200 nm or less is 55% or more.

**14.** The composite particle according to claim 1, wherein the 50% particle diameter $D_{V50}$ is 1.0 um or more and 20.0 um or less, and the 90% diameter $D_{V90}$ is 30.0 um or less in the cumulative particle size distribution on a volume basis.

**15.** The composite particle according to claim 1, wherein the BET specific surface area is 2.0 $m^2/g$ or more and 20.0 $m^2/g$ or less.

**16.** The composite particle according to claim 1,
wherein $I_{Si}/I_G$ is 0.10 or more and 1.30 or less, and
the R value ($I_D/I_G$) is 1.00 or more and 1.30 or less, wherein, in the Raman spectrum of the composite particle, a peak is present at 450 to 495 $cm^{-1}$, the intensity of the peak is defined as $I_{Si}$, the intensity of the G band (peak intensity in the vicinity of 1600 $cm^{-1}$) is defined as $I_G$, and the intensity of the D band (peak intensity in the vicinity of 1360 $cm^{-1}$) is defined as $I_D$.

**17.** The composite particle according to claim 1, wherein the full width at half maximum of the peak of the (111) plane of Si is 3.0 deg. or more in an XRD pattern, using Cu-K$\alpha$ radiation, of the composite particle.

**18.** The composite particle according to claim 1, wherein the oxygen content rate is 0.3 to 10% by mass.

**19.** The composite particle according to claim 1, wherein SiC is not present.

**20.** The composite particle according to claim 1, wherein the silicon content rate is 20 to 85% by mass.

**21.** The composite particle according to claim 1, wherein the carbon is amorphous.

**22.** The composite particle according to claim 1,

wherein $A_{Si}$ is 0.05 or more;

$$A_C / (A_C + A_{Si} \times (B_{SiO2} + B_{SiO}))$$

is 0.55 or more,

wherein the ratios of the number of atoms of Si, O, and C according to the Narrow spectrum of X-ray photoelectron spectroscopy are defined as $A_{Si}$, $A_O$, and $A_C$, respectively, and the ratios of $SiO_2$ and SiO among the Si species ratios according to Si2p spectral state analysis are defined as $B_{SiO2}$ and $B_{SiO}$, respectively; and

the true density according to dry density measurement using helium gas is 1.80 g/cm$^3$ or more and 2.30 g/cm$^3$ or less.

23. A method for producing a composite particle, including the following steps (1), (2), and (3):

step (1): a step of coating raw material carbon or a resin that turns into raw material carbon by heating in an inert atmosphere in step (2) described below with a metal oxide or a metal oxide precursor;
step (2): a step of heating a material obtained in the step (1), which has been coated with the metal oxide or metal oxide precursor, in an inert atmosphere, followed by activation to obtain a carbon material having pores formed by an action of the metal oxide and fine pores due to the activation; and
step (3): a step of allowing a Si-containing gas to act on the carbon material, which has been heated, to precipitate a Si-containing compound on the surface and in fine pores of the carbon material, thereby obtaining a composite particle comprising porous carbon and silicon.

24. A negative electrode active material comprising the composite particle according to any one of claims 1 to 22.

25. A negative electrode mixture layer comprising the negative electrode active material according to claim 24.

26. A lithium-ion secondary battery comprising the negative electrode mixture layer according to claim 25.

[Fig. 1]

[Fig. 2]

[Fig. 3]

[Fig. 4]

Regulus 1.0kV-D x100k SE+BSE(U)　　　500nm

[Fig. 5]

Regulus 1.0kV-D x100k SE+BSE(U)　　　500nm

**EP 4 411 893 A1**

## INTERNATIONAL SEARCH REPORT

| International application No. |
|---|
| **PCT/JP2022/036962** |

### A. CLASSIFICATION OF SUBJECT MATTER

*H01M 4/587*(2010.01)i; *C01B 32/372*(2017.01)i; *C01B 33/02*(2006.01)i; *H01M 4/36*(2006.01)i; *H01M 4/38*(2006.01)i
FI: H01M4/587; H01M4/38 Z; H01M4/36 A; H01M4/36 E; H01M4/36 C; C01B33/02 Z; C01B32/372

According to International Patent Classification (IPC) or to both national classification and IPC

### B. FIELDS SEARCHED

Minimum documentation searched (classification system followed by classification symbols)
H01M4/587; C01B32/372; C01B33/02; H01M4/36; H01M4/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2009-526743 A (ISTVAN, Rudyard Lyle) 23 July 2009 (2009-07-23) paragraphs [0039]-[0060], [0079]-[0093] | 1-15, 19-21, 23-26 |
| A | | 16-18, 22 |
| Y | JP 2016-132608 A (TOYOTA CENTRAL RES & DEV) 25 July 2016 (2016-07-25) paragraphs [0018]-[0058], [0189] | 1-15, 19-21, 23-26 |
| Y | JP 2007-234358 A (TOSHIBA CORP) 13 September 2007 (2007-09-13) paragraphs [0051]-[0065] | 2, 5 |
| A | JP 2010-277989 A (DENSO CORP) 09 December 2010 (2010-12-09) entire text | 1-26 |
| A | JP 2008-251221 A (TDK CORP) 16 October 2008 (2008-10-16) entire text | 1-26 |
| A | WO 2016/009938 A1 (TORAY INDUSTRIES, INC.) 21 January 2016 (2016-01-21) entire text | 1-26 |

☐ Further documents are listed in the continuation of Box C.　　☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/036962**

| Patent document cited in search report | | | Publication date (day/month/year) | Patent family member(s) | | | Publication date (day/month/year) |
|---|---|---|---|---|---|---|---|
| JP | 2009-526743 | A | 23 July 2009 | US 2009/0246528 A1 paragraphs [0039]-[0060], [0077]-[0091] WO 2007/120386 A2 EP 1996509 A2 CA 2642151 A KR 10-2008-0112234 A CN 101421180 A AU 2007239058 A MX 2008010572 A RU 2008132758 A IL 193423 D BR PI0707932 A | | | |
| JP | 2016-132608 | A | 25 July 2016 | (Family: none) | | | |
| JP | 2007-234358 | A | 13 September 2007 | (Family: none) | | | |
| JP | 2010-277989 | A | 09 December 2010 | US 2010/0316907 A1 entire text DE 102010018458 A CN 101877406 A KR 10-2010-0118520 A | | | |
| JP | 2008-251221 | A | 16 October 2008 | US 2008/0237536 A1 entire text CN 101276908 A | | | |
| WO | 2016/009938 | A1 | 21 January 2016 | US 2017/0170478 A1 entire text EP 3171431 A1 CN 106537661 A KR 10-2017-0033326 A TW 201603366 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002141069 A
- JP 2014514683 A
- US 10424786 B
- JP 2014122158 A